(19) Europäisches Patentamt
European Patent Office
Office européen des brevets

(11) **EP 1 220 547 A1**

## (12) EUROPEAN PATENT APPLICATION
published in accordance with Art. 158(3) EPC

(43) Date of publication:
**03.07.2002 Bulletin 2002/27**

(21) Application number: **00961007.2**

(22) Date of filing: **14.09.2000**

(51) Int Cl.⁷: **H04N 9/04**

(86) International application number:
**PCT/JP00/06294**

(87) International publication number:
**WO 01/22737 (29.03.2001 Gazette 2001/13)**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.09.1999 JP 26387299**
**07.02.2000 JP 2000029678**

(71) Applicant: **Nature Technology Co., Ltd.**
**Osaka-shi, Osaka 530-0044 (JP)**

(72) Inventors:
• **Abdellatif, M. A., c/o Nature Technology Co., Ltd.**
**Osaka-shi, Osaka 530-0044 (JP)**
• **KITAMURA, Koji**
**Nara-shi, Nara 631-0003 (JP)**

(74) Representative: **Hering, Hartmut, Dipl.-Ing.**
**Patentanwälte**
**Berendt, Leyh & Hering**
**Innere Wiener Strasse 20**
**81667 München (DE)**

(54) **IMAGE PICKUP SYSTEM, IMAGE PROCESSOR, AND CAMERA**

(57) An image pickup system in which color can be precisely corrected in order to realize invariability of color through simple calibration while decreasing the area of a reference image part. The image pickup system comprises a camera (2) having a lens (41), an image pickup device (31), and a reflecting surface (61) and picking up a main scene on the image pickup device. Reference signal values (rn, gn, bn) are determined by averaging the intensities of the reflected lights of a reference scene received by the image pickup device from the respective color channels of a plurality of pixel parts. The reference signal values represent the light source color and a main image is orrected using the reference signal values. Correction is performed through digital or analog electrical processing by an image processor (7) or through optical processing using a complementary color filter disposed in front of the image pickup device (31).

Fig.1

**EP 1 220 547 A1**

Printed by Jouve, 75001 PARIS (FR)

**Description**

TECHNICAL FIELD

The present invention relates to an image capturing system, an image processing apparatus and a camera therefore including a lens, an image capturing device, a light detecting element and a reflection surface, for correction of an image included in a main scene captured in the image capturing device of the camera, by using information from a reference scene obtained from the reflection surface.

BACKGROUND ART

Colors from an object are subject to change by incident light, and it is therefore difficult to display an image captured by a camera in constant colors regardless of the kind of incident light. Human eyes, however, can recognize the colors of the object with constancy even in such an environment, due to an ability known as the color constancy.

Conventionally, two methods of color correction are used in order to achieve the color constancy in the image captured by a camera. One is known as the spatial correction method, in which the correction is performed portion by portion of the captured image. The other method is known as the global correction method, in which the correction is performed uniformly to the image as a whole. The former method includes what is known as the Retinex method whereas the latter includes a white patch method, a highlighted portion reference method, and so on.

The first method, or the Retinex method, is based on a theory known as the GWA (Gray World Assumption) theory, i.e. a hypothesis that the average color of object surface is gray in a light search path . Based on this hypothesis, the color correction to a given portion, such as a pixel, is performed by using color information from light search path for a surround of the pixel.

Thus, according to the Retinex method, a complex calculation must be performed for every pixel based on the detected light information, posing a problem that a huge amount of calculations must be made by a computer. Further, if a color of the scene is dominated by a certain color for example, the dominant color is recognized as the color of light source, posing a limit to application.

On the other hand, the white patch method, classified in the latter method, uses a white patch inserted in the scene. Reflected light from the white patch is recognized as being the color of the light source, and the color correction is performed based on the recognized color of the light source. However, as a practical issue, it is very difficult to insert the white patch directly in the scene that is an object of recording.

According to the third method, i.e. the highlighted portion reference method, a surround of a saturated pixel for example is assumed as the highlighted portion, and the color in this surround is recognized as the color of the light source. Therefore, the highlighted portion must be found independently from a scene already captured, resulting in a very complex procedure of image processing. Further, since the pixel in the highlighted portion is saturated, it is impossible to identify the color of the light source from them.

Under the above circumstances, the inventor of the present invention proposed a nose method as a spatial correction method in the International Application Number PCT/JP96/03683 (International Laid-Open No. WO98/27744). The nose method uses an image capturing system comprising a camera including a lens, an image capturing device and a reflection surface, and an image processing unit for correction of an image included in a main scene captured in the image capturing device of the camera, by using information from a reference scene obtained from the reflection surface. With the above arrangement, a mapping for correlating the reference scene with the main scene is performed in advance, and the image correcting unit performs the color correction of the main scene by practically dividing color data of each pixel in the main scene by the corresponding color data from the reference scene.

However, according to the above nose method, the mapping must be made between the reference scene and the main scene for establishing mutual correspondence between the two. Thus, in order for the color correction to be performed accurately, a precise calibration must be performed as a prerequisite for the mapping, and this calibration requires a complex procedure. Further, the mapping requires a certain size of reference image to be reserved in the captured image. Therefore, if the main image and the reference image exist in a same image region, the main image must be smaller by the size of the reference image.

In consideration of the above circumstances, a first object of the present invention is to provide an image capturing system and a camera therefor capable of correcting a color for achieving the color constancy or intensity stabilization by a simple calibration.

A second object of the present invention is to provide an image capturing system and a related product capable of sufficiently correcting the color even if the size of the reference image portion is small.

DISCLOSURE OF THE INVENTION

In order to achieve these objects, an image capturing system according to the present invention has following characteristics: Specifically, the image capturing system according to the present invention is for correction of colors in an image, comprising: a camera including a lens, image capturing devices, light detecting elements and a reflection surface for capture of a main scene in the image capturing devices, each of the image capturing devices and the light detecting elements having a plurality of color channels, the reflection surface being disposed within a visual field of the camera for reflection of light from the main scene or a reference scene disposed near the main scene for reception by the light detecting elements via the lens; and an image processing unit obtaining a value from one pixel or an average value from a plurality of pixels, for each of the color channels as reference signal values (rn, gn, bn), out of reflected light from the reference scene received by the light detecting elements, and a correction unit for correction of colors in the image by the reference signal values (rn, gn, bn).

This capturing system in comprising this correcting system so as to capture the image electrically in analogue or digital circuit, wherein the correction unit is a correcting portion for practical division by the reference signal values (rn, gn, bn) obtained for each of the color channels, of respective main signal values (r[x][y], g[x][y], b[x][y]) at each of corresponding locations on coordinates in the main scene captured by the image capturing devices, whereby obtaining corrected signal values (rc[x][y], gc[x][y], bc[x][y]) as corrected values of the main signal value.

The image capturing system having the above characteristics is useful in achieving the color constancy in a color image. To this end, the image capturing devices and the light detecting elements of the camera must have a plurality of color channels, and the image processing unit must perform the color correction of the main signals by practically dividing the main signal values by the reference signal values for each of the color channels.

Now, function of stabilizing the intensity of the image according to the present invention will be described using an example of the color constancy in a color camera. It should be noted, however, that the present invention is of course applicable to stabilization of the intensity of an image in a black-and-white camera.

When object surface in a scene is under illumination from a single source of light, a reflected light I($\lambda$) is expressed by the following expression:

$$I(\lambda) = E(\lambda)S(\lambda) \tag{1}$$

where, S($\lambda$) represents a reflectance function on the object surface, E($\lambda$) represents a Spectral Power Distribution function (SPD) of the source light dependent upon shape geometry, and $\lambda$ represents a wave length of the source light.

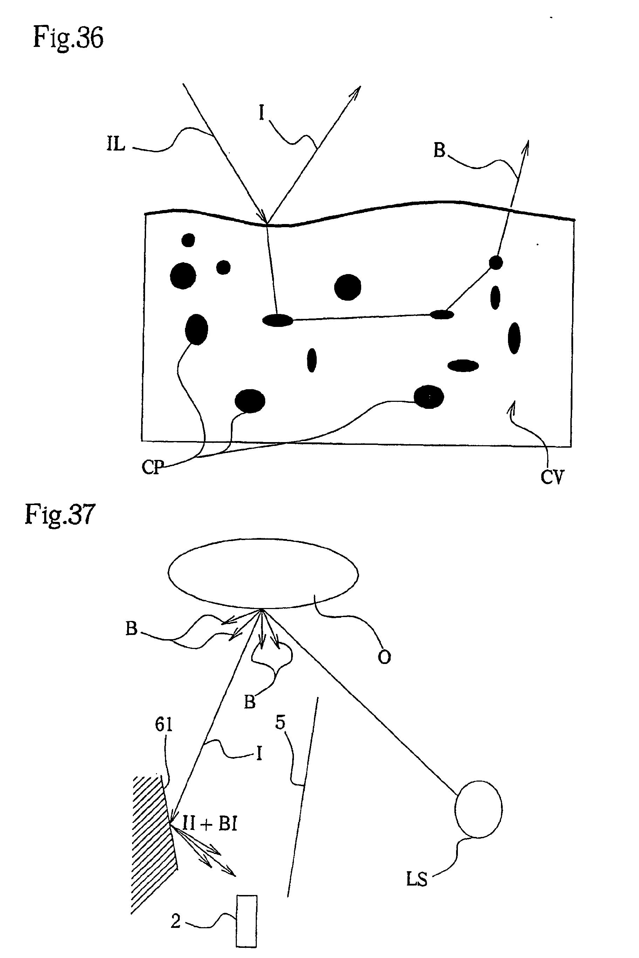

A reflection from an inhomogenous dielectric surface comprises a linear sum of two components, i.e. an interface reflection and a body reflection. The surface of great many kinds of objects in the world, such as clothes, a person, a wall, a painted metal, a Plastic and so on are classified into this inhomogenous dielectric surface. Fig. 36 shows a state of a surface of a color medium in which a color dye is dispersed. Part of incident light is reflected on a boundary between the surface of the color medium and a surrounding media: Such a component of reflection, called the interface reflection (I) represents the color of light source. The rest of the incident light repeats inter-reflection continuously among a plurality of color dye particles, and becomes a component called the body reflection (B), carrying the color of the dye called the surface color modified by light source color. The above-described model is called a dichromatic model, according to which the reflectance function S($\lambda$)is expressed as follows:

$$S(\lambda)= [m_I(g)c_I(\lambda)+m_B(g)c_B(\lambda)] \tag{2}$$

where, $m_I(g)$ and $m_B(g)$ represent standard coefficients respectively for the interface reflection and the body reflection, being dependent only on geometric relationship between lighting andviewing. The terms $c_I(\lambda)$, $c_B(\lambda)$ represent optical components respectively in the interface reflection and the body reflection, being dependent only on the wavelength ($\lambda$) of the source light.

If the object is gold or copper, the color of incident light is altered in the interface reflection (I). On the other hand, most of the other objects in the world such as silver, aluminum and other metals, and color media such as fat, oil or wax and so on follow what is known as the Neutral Interface Reflection (NIR) theory, carrying the original SPD of said light, without altering the color of the incident light. The interface reflection often appears as the highlighted portion, and therefore specular reflection (I) on most of the object surfaces can be considered to carry the color of the incident light.

When the light from the interface reflection reaches the camera, each of the elements in the image capturing device performs an integrating operation of a brightness within a given range of values, yielding a spectral observation result ki (x,y) expressed as follows:

$$ki(x,y)= [\iiint Ri(\lambda)I(X,Y,\lambda)d\lambda dXdY]^{\gamma}+b \tag{3}$$

where, the subscript i may take either one of values 1, 2 and 3, respectively corresponding to the red, green and blue, whereas (x, y) represents a coordinate location in the captured image, and (X, Y) represents a world coordinate system with respect to a center of the captured image. $Ri(\lambda)$ represents the i-th spectral response related to a characteristic of a sampling filter. Gamma ($\gamma$) represents an image-electricity conversion index, and b is called sensor offset or dark noise. The index $\gamma$ and the dark noise b can be adjusted in order to cause the output as a linear image for which $\gamma=1$ and $b=0$.

Next, consideration will be made to the inter-reflection on said reflecting surface of a reflected light from an object, with reference to Fig. 37. An incident light cast onto the object makes the interface reflection (I) and the body reflection (B), and then travels toward the camera and the reflection surface. If the reflection surface follows the dichromatic model, the two reflection lights that reach the reflection surface make following types of inter-reflections: interface - interface reflection (II), body - interface reflection (BI), interface - body reflection (IB), and body-body reflection (BB). Needless to say, the reflection surface should reflect the color of the light source without alteration, in accordance with the NIR theory, and therefore should preferably be made of aluminum for example, or white or gray resin, paper, and so on.

Out of these reflection lights causedbythe inter-reflection, the body - body reflection (BB) has a very low intensity and therefore negligible. The interface - body reflection (IB) does not alter spectra of the light because reflecting surface is optically flat and is smaller than the interface - interface reflection (II). Thus, whether the selected material of the reflection surface is aluminum which does not conform to the dichromatic model or another material which conforms to the dichromatic model, it can be regarded that the components in the inter-reflection light is identical. Hence, light $C(Xn, Yn, \lambda)$ inter-reflected on a given coordinate location on the reflection surface is expressed as follows:

$$C(Xn,Yn,\lambda)=\iint B1(x,y)Sn(X,Y,\lambda)S(X,Y,\lambda)E(X,Y,\lambda)dXdY \tag{4}$$

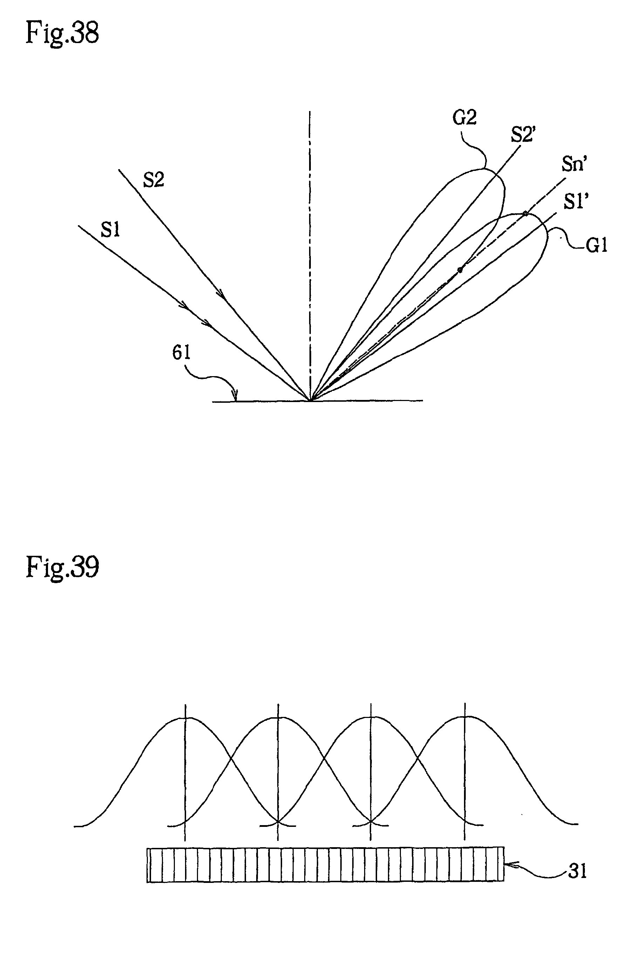

Fig. 38 is a schematic diagram showing a process of a first blurring based on diffused specular reflection on the surface of the reflection surface. An incident light which comes on an incident path S1 and then reflects has a highest intensity on a specular reflection path S1', with decreasing intensity away from the specular reflection path, as indicated by a curve G1. Similarly, an incident light which comes on an incident path S2 and then reflects has a highest intensity on a specular reflection path S2', with decreasing intensity away from the specular reflection path, as shown by a curve G2. A reflection light on a reflection path C' has a combined intensity of two values determined by crossing of a reflection path Sn' with the curves G1 and G2 respectively. The term B1 (X, Y) included in the expression (4) is a function of this first blurring, depending only on surface roughness. On the other hand, the term $Sn(X, Y, \lambda)$ represents the spectral reflectance on the reflection surface and is dependent on the world coordinates and the wavelength $\lambda$. It should be noted here that the term $Sn(X, Y, \lambda)$ assumes the value of 1 under the NIR hypotheses.

For example, when an inter-reflection light reflected on a reflection surface goes through a lens and enters an image capturing device which is a kind of light detecting element, the inter-reflection light is defocused by the lens because the reflection surface is placed closely to the lens. Accordingly, a point on the reflection surface is projected as a circle of changing intensity, conforming to the spacial blurring function B2(Sn, Yn). Fig. 39 shows this blurring caused by defocusing, and the inter-reflection light $Cin(Xni, Yni, \lambda)$ is represented by the following expression:

$$Cin(Xni, Yni,\lambda)=\iint B2(Xn,Yn)C(Xn, Yn, \lambda)\, dXndYn \tag{5}$$

where, the subscript ni corresponds, for example, to each of pixels in the image capturing device holding a reference scene obtained from inter-reflection light from the reflection surface. When this light $Cin(Xni, Yni, \lambda)$ reaches the image capturing device for example, the spectral observation result kni(x, y) can be obtained as the following expression from the expression (3)

$$kni(x, y)=[\iiint Ri(\lambda)Cin(Xni, Yni, \lambda)d\lambda dXnidYni]^{\gamma}+b \tag{6}$$

In simpler words, kni (x, y), which represents an intensity in each of the RGB components at each of the coordinate locations of the reference scene, is an expression of the interface-interface reflection II and the body - interface reflection BI in a form of a convolution of the two blurring functions B1, B2.

When a light of interface reflection I from a highlighted portion of amain scene is captured directly by the image capturing device, often, the light has an intensity exceeding a dynamic range of the image capturing device, and occupies only a small area. Therefore, even though the highlighted portion includes information about the light source, it is difficult to use the information effectively.

On the contrary, if the blurring caused by the reflection surface, and the blurring caused by the lens in addition, are used, the light from the highlighted portion is diffused by the convolution of the two functions. Further, the light intensity is decreased by the reflection, down into the dynamic range. Therefore, if the highlighted portion is captured by using the reflection surface, it becomes easier to capture the color of the light source by using the highlighted portion as compared with the case in which the highlighted portion is captured by using the direct image only. Further, the interface reflection I from the highlighted portion, having a higher brightness than the body reflection B, becomes more dominant than the body-interface reflection BI. However, if there is only a very little highlighted portion in the scene, the body - interface reflection BI in the reference scene is used for correcting the main scene. In this case, the convolution of the two functions practically serves as an optical implementation of the GWA theory. According to the present invention therefore, correction by reference to the highlighted portion and correction according to the GWA theory are performed simultaneously in parallel with each other.

Returning to the conventional method disclosed in the fourth gazette, the mapping is performed between spectrum kni(x, y) at each of the coordinate locations of the reference scene and the spectrum kn(x, y) at each of the coordinate locations of the main scene. Then, the color correction as a spatial method was performed through dividing operation by using values at each of the coordinate locations.

However, a conclusion was drawn later that in many cases, there is no particular problem in assuming that the color of the light source, such as the sun or an indoor illumination, is primarily only one. Further, there was found a possibility of sampling the color of the overall light source from a portion of the reference scene, from a fact that information on the highlighted portion is diffused in the reference scene by the convolution due to the use of the reflection surface.

Therefore, according to the present invention, a single value representing the color of light source (a vector corresponding to the three colors) is obtained by obtaining a value from one pixel or an average value from a plurality of pixels out of the reflection light in the reference scene received by the light detecting element.

Further, when we correct the image by an analog or digital circuit, for example , the reflection surface should only reflect light from the main scene or a reference scene disposed near the main scene for reception by the light detecting elements. When designing the reflection surface, the only requirement is that the reflection surface should reflect light mainly from the main scene or the reference scene disposed near the main scene along a main path of the reflected light. Further, the correction of the main signal is performed by practically dividing the main signal value at each of the coordinate locations of the main scene by a single reference signal value (vector).

The present invention uses a global correction method in which a value representing a single color of light source is used as a rule. Therefore, correspondence between the reference image portion from the reflection surface and the main image portion may not be as accurate in said prior arts, making calibration very simply. Further, because the correspondence between the reference image portion and the main image portion may not be as accurate as in said prior arts, it becomes possible to perform the color correction even if the area of the reference image portion is decreased. Further, in performing the color correction, a single value is used as the value of the reference signal, which is applied universally to the entire region of the image, and therefore it becomes possible to remarkably increase correction speed .

Numerical division poses a much greater load to the computer than the multiplication. However, according to the present invention, only one value of the reference signal is used for all of the color channels as the de nominators of the division. Thus, it becomes possible to obtain coefficients (sr, sg, sb) having the reference signal values (rn, gn, bn) as respective denominators in advance, and then performing the correction by multiplying these coefficients (sr, sg, sb) with the signal values (r[x][y], g[x][y], b[x][y]) respectively. With this arrangement, speed of image processing can be dramatically improved. The reference signal values (rn, gn, bn) as respective denominators of the coefficients (sr, sg, sb) may be different from each other, with each of the color channels having another coefficient (s) as a common numerator.

The coefficients (sr, sg, sb) may be obtained from one of frame signals sequentially sent from the image capturing devices or the light detecting elements, and then the coefficients (sr, sg, sb) are multiplied respectively with the main signal values (r[x][y], g[x][y], b[x] [y]) obtained from another frame signal received at a later time, thereby performing correction of the main signal. In this case, if the correction of the main signal is made by multiplying the coefficients (sr, sg, sb) respectively with main signal values (r[x][y], g[x][y], b[x][y]) obtained from a plurality of other frames, then the processing operation can be performed even more quickly because the number of calculations necessary for obtaining the coefficients becomes accordingly fewer. Such an arrangement can be achieved by providing a video amplifier for multiplication of the signals from said other frames with the coefficients (sr, sg, sb).

According to the above image processing unit, an arrangement may be made so that if one of the main signal values (r[x] [y], g[x][y], b[x][y]) takes a presumably maximum value (rm, gm, bm) within a set of this signal, then said another coefficient (s) is set to a value which brings the presumably maximum value (rm, gm, bm) close to a maximum scale value (D) of the main signal values. With such an arrangement, it becomes possible to reduce extreme difference in intensity between the highlighted portion and the surrounding portion of the image.

Further, an arrangement may be made in which a pixel is defined as a corrupted pixel if the main signal values in the pixel have reached the maximum scale value (D) in two of the channels and if the main signal value in the remaining channel has not reached the maximum value (D). Then, said another coefficient (s) has a value which brings presumably minimum values (rcm, bcm) of the main signal values in said remaining channel within a set of the corrupted pixels at least to the maximum scale value (D). With this arrangement, the color of the corrupted pixels can be corrected in a similar manner as for the highlighted portion, thereby rendering the corrected image more natural.

According to experiments, it has been learned that a corrected value (bc) of the main signal in a blue channel can be calculated based on a ratio between corrected values (rc, gc) in red and green channels if the main signal value only in the blue channel has reached the maximum scale value (D) and if the main signal values in the red and green channels have not reached the maximum scale value (D).

Image compression technology is commonly used in Internet for example. The image processing unit according to the present invention, since compression includes loss of useful color data, provides correction of the image prior to compression.

The camera according to the present invention may includes a reflection surface moving mechanism capable of disposing the reflection surface out of the visual field of the camera. In such an arrangement, the reflection surface is disposed out of the visual field of the camera after obtaining the reference signal values (rn, gn, bn) for capture of the main image, and the main signal values (r[x][y], g[x][y], b[x] [y]) are corrected based on these reference signal values (rn, gn, bn). With this arrangement it becomes possible to prevent the reference image portion from appearing within a capture region of an intended image.

On the other hand, according to the present invention, an arrangement may be made in which each of the image capturing device and the light detecting element is constituted by an individual element of a same characteristic, and the lens is provided individually for each of the image capturing device and the light detecting element. Further, in this arrangement, the lenses are synchronized with each other in zooming and iris controls, the angle and coordinate positions of a starting point of the reflection surface are changed continuously in accordance with a focal length of the lens, and the reflection surface is fixed within a maximum visual field of the lens. With this arrangement, by selecting one portion which is matched with the focal length, from selected reference portions provided in a reference image portion, a link between zooming operation and the reference image portion can be readily established without any moving parts involved. It should be noted here that an inferior light detecting element having a lot of defective pixels and therefore not suitable for the image capturing device can be employed as the light detecting element, thereby achieving a certain cut down on cost. If such a choice is made, a coordinate table may be provided for elimination of the corrupted pixels of the light detecting element when selecting the reference portions so as to maintain the high processing speed.

An arrangement may be made in which the reference scene is limited mainly to a center portion or an adjacent portion of the main scene, by disposition of the reflection surface or selection of the plurality of pixels for the reference signals. With such an arrangement, the color correction can be accurately performed particularly to the center portion and the surrounding portion which represent an important portion of the main scene.

The image capturing system according to the present invention is also applicable when images are merged. Preferably, the image capturing system should further comprise at least another one more camera, so that the corrected signal values (rc[x][y], gc[x][y], bc[x][y]) are provided from one of the cameras for virtual multiplication in each of the color channels with the reference signal values provided from the other camera for obtaining a secondary corrected image, and the secondary corrected image is merged with an image from said other camera into a synthesized image. With this arrangement, the two images can be merged into a naturally looking image as if the images are shot under a lighting from the same light source.

Further, an arrangement may be made in which the image capturing system further comprise a CG (Computer Graphics) image generating portion for generation of a computer image and a CG light source determining portion for determining a light source color for the computer image for virtual multiplication of the corrected signal values (rc[x] [y], gc[x][y], bc[x][y]) in each of the color channels with a light source color value obtained by the CG light source determining portion for obtaining a secondary corrected image, and then, the secondary corrected image is merged with the computer image generated by the CG image generating portion into a synthesized image. With this arrangement, the computer-generated image and the image from an actual shot can be merged to look very naturally as described here above.

According to the above camera, preferably, each of the image capturing devices and the light detecting elements should be constituted by an individual element of a same characteristic. As shown in the above expression (6), the intensity component in each of the color channels is expressed as a function to the $\gamma$-th power. However, the value of $\gamma$ can vary depending on the characteristics of the image capturing device and so on. Therefore, it becomes necessary to equalize the values of the two multipliers before dividing the main signal values by the reference signal values. A process for the equalization can be very complicated, yet can be entirely skipped by using the element having the same characteristic for both of the image capturing device and the light detecting device. This eliminates need for hardware for the unnecessary signal processing operation. It should be noted here however, that those elements of the same characteristic usually do have differences in the characteristic from one lot of production to another, and this problem becomes more serious in the cheap elements. However, the problem can be completely eliminated by making the light detecting element as part of the image capturing device, making possible to obtain very good results of the correction.

The above camera may further includes a storing portion for storage of an image file containing images captured in the image capturing devices or a holding portion for storage of a film recorded with said images, with said images containing the main scene and the reference image portion located at an end portion of an overall image region.

Further, the camera may have an arrangement in which the overall image region is rectangular, having a corner portion disposed with the reference image portion. With this arrangement, the area of the reference image portion can be very small. Further, with this arrangement, the reflection surface may be made rotatable about a center axis of the lens, so that a position of the reflection surface selectively determine one of the corners at which the reference image portion is placed or the reference image portion is not placed within the overall image region. Still further, the main image may be laterally elongated to form a rectangular shape, and the reference image portion may be placed at an upper portion or a lower portion of the overall image region, thereby applying the present invention to so-called panorama view.

According to the above camera, an arrangement may be made in which the lens is a zoom lens, and the angle and coordinate positions of a starting point of the reflection surface are changed in accordance with a focal length of the lens. In this case, preferably, arrangement should be made so that the angle and coordinate positions of the starting point of the reflection surface are changed continuously in accordance with a focal length of the lens, and relative position between the reflection surface and the lens is changed in accordance with the focal length of the lens by a reflection surface moving mechanism.

The present invention can be realized as an IC chip or an electric circuit provided with function achieved by the image processing unit described above. Further, the present invention can be realized as a recording medium recorded with software to be loaded into a computer for execution of the function achieved by the image processing unit described above. Further, the image processing unit described above can have a constitution in which the image correction is performed between two computers connected with each other via a communication link such as a telephone line or Internet.

The camera may be provided with a cover for prevention of light from entering into the reflection surface from outside of the main scene or the reference scene. However, the cover may be eliminated if there is no possibility for the outside light to coming in the reflection surface.

The present invention is applicable to a single channel camera such as a black-and-white camera. In such a case, the present invention serves as a image capturing system for stabilization of intensity in an image, comprising: a camera including a lens, image capturing devices, light detecting elements and a reflection surface for capture of a main scene in the image capturing devices, the reflection surface being disposed within a visual field of the camera for reflection of light from the main scene or a reference scene disposed near the main scene for reception by the light detecting elements via the lens; and an image processing unit obtaining a value from one pixel or an average value from a plurality of pixels, for each of the color channels as reference signal values (rn, gn, bn), out of reflected light from the reference scene received by the light detecting elements, for practical division by the reference signal values (rn, gn, bn) of respective main signal values (r[x][y], g[x][y], b[x][y]) at each of corresponding locations on coordinates in the main scene captured by the image capturing devices, whereby obtaining corrected signal values (rc[x][y], gc[x][y], bc[x][y]) as corrected values of the main signal value.

Now, the description given above is for the color correction unit to electrically correct image signals. In other words, the signal correction is performed after the image is captured by the image taking devices or the light receiving elements. However, the image capturing device such as CCD cannot capture image beyond a certain brightness. As a result, some pixels around a highlighted portion can be saturated, causing unwanted influence on the color correction. Or, if the reflected light of the reference scene is weak, the correction could include excessive noise, causing unwanted influence on the color correction. Further, according to the color correction by means of digital processing, the corrected color will not show a smooth continuous change but intermittent gaps.

Thus, according to the present invention, configurations for optical color correction are proposed, in which the correction unit includes means for measuring a complimentary color of a color determined by the reference signal values (rn, gn, bn), and optical filter means including an optical filter for reproducing the complementary color and altering a color of an image which reaches the image capturing devices. The optically operating correction unit can be combined with any one of the color-of-light source measuring methods excluding the one that uses the reflection surface. Specifically, the optically performed correction can be used together with the methods described earlier as the Retinex method, the white patch method, the highlighted portion method, as well as with other methods that use other types of sensors for the measurement of the color of the light source.

When configuring the optical filter, it is preferable basically that the optical filter is disposed so as to alter a color of the image which reaches the light detecting elements, and the means for obtaining the complementary color controls the optical filter so as to bring the color balance of the reference signal values (rn, gn, bn) as close as possible to a required color balance.

As a specific configuration, the optical filter means includes a plurality of preset filters each having a color balance different from the others, and one of the present filters closest to the complementary color is selected. In this case, aplurality of the preset filters can be used in combination.

The optical filter means may include a pump for pumping a medium, an ink injector capable of injecting a plurality of color inks individually, a mixer for making a mixture of the medium and the color inks, and a transparent passage serving as the optical filter for allowing the mixture to pass through. Also, the optical filter means may include a pump for pumping a medium, an ink injector capable of injecting a plurality of color inks individually, a plurality of mixers each for making a mixture of the medium and one of the color inks individually, and a plurality of transparent passages each serving as the optical filter for allowing one of the mixtures to pass through. Further, the optical filter means may include a pump for pumping a medium, an ink injector capable of injecting a plurality of color inks individually, a plurality of mixers each for making a mixture of the medium and one of the color inks individually, and a plurality of transparent cells each serving as the optical filter for allowing one of the mixtures to pass through. In this case, each cell is provided on a front surface of a black-and-white image capturing device, to correspond to one of RGB in one pixel, and the cells assigned to a same color are interconnected via bridge path.

The optical filter may be such that a filter characteristic of the optical filter is changeable. With this arrangement, the optical filter means may further include a transmittance level changing means capable of changing a transmittance in accordance with the filter characteristic change, so that color strength can be changed for each filter characteristic.

The camera can be a three-CCD camera for example, which includes an optical block for separating light into RGB and, three image capturing elements respectively corresponding to RGB. In this case, the optical filter is provided by the optical block, and the optical filter means includes for each of the image capturing devices a transmittance level changing means capable of changing a darkness level of the image in order to achieve the optical correction. Each of the transmittance level changing means may include two polar filters each capable of changing its angle. Further, each of the transmittance level changing means may include two polar filters each capable of changing its angle, with one of the two polar filters being provided as a common filter in front of the optical block, and the other of the two being provided individually per color channel behind the optical block.

The image capturing system can also have a configuration in which the image capturing device is provided by a film, and the present invention is applied during the printing process from the film to the printing paper. Specifically, in this case, the means for measuring a complementary color includes a lamp, a color-of-light detector for detecting a color of light having passed the light detecting elements, a light-source-color measuring portion, and a complementary color measuring portion based on the light-source-color measuring portion. The optical filter means includes a filter for further allowing the light from the lamp through the film to a printing paper, and a filter changing unit for giving this filter the complementary color.

In the above optical filter means, there can be a time lag before the color correction takes place. Thus, in addition to the optical filter means, the correction unit may further include an electrical correcting portion for practical division by the reference signal values (rn, gn, bn) obtained for each of the color channels, of respective main signal values (r[x][y], g[x][y], b[x][y]) at each of corresponding locations on coordinates in the main scene captured by the image capturing devices, whereby obtaining corrected signal values (rc[x][y], gc[x][y], bc[x][y]) as corrected values of the main signal value, the electrical correcting portion providing a color correction transitionally before completion of a color correction by the optical filter means.

As has been described so far here above, according to the characteristics of the present invention, it has become possible to provide an image capturing system and a camera therefor capable of correcting a color for achieving the color constancy or intensity stabilization by a simple calibration.

Further, according to the above characteristics of the present invention, it has become possible to sufficiently perform the correction of the color while keeping the size of the reference image to very small region.

Further, according to the color correction unit that also includes the optical correction means, a clear and natural image as after the correction is obtained whether the light in the scene is strong or weak.

Other objectives, arrangements and effects of the present invention should become clear from the following description.

## EP 1 220 547 A1

BRIEF DESCRIPTION OF THE DRAWINGS

Fig. 1 is a block diagram showing an image capturing system.

Fig. 2 shows a camera for the image capturing system, including a side view (a), a front view (b), and a perspective view (c).

Fig. 3(a) through (c) are diagrams each showing an overall image region for describing a relationship between a main scene and a reference scene whereas Fig. 3(d) through (f) are enlarged view of the reference scene.

Fig. 4 shows a variation to the camera for the image capturing system, including a side view (a), a front view (b) and a perspective view (c).

Fig. 5 is a flowchart showing a processing procedure in a correcting portion of the image capturing system.

Fig. 6 is a second flowchart to be continued from Fig. 5.

Fig. 7 is a third flowchart to be continued from Fig. 6.

Fig. 8 is a fourth flowchart to be continued from Fig. 7.

Fig. 9 is a fifth flowchart to be continued from Fig. 8.

Fig. 10 is a sixth flowchart to be continued from Fig. 9.

Fig. 11 is a diagram showing the overall image region for describing another relationship between the main scene and the reference scene.

Fig. 12 is a graph showing a relationship between a color response value kr and a color histogram rh[kr], in a red channel.

Fig. 13 is a graph showing a relationship between a color response value krc in corrupted pixels and a color histogram rhc[krc] in the corrupted pixels, in the red channel.

Fig. 14 is a timing chart showing a relationship between reference signal and main signal in a personal computer.

Fig. 15 is a diagram corresponding to Fig. 2, showing a second embodiment of the present invention.

Fig. 16 is a diagram corresponding to Fig. 2, showing a third embodiment of the present invention.

Fig. 17 is a block diagram showing a fourth embodiment of the present invention.

Fig. 18 is a block diagram showing a fifth embodiment of the present invention.

Fig. 19 is a block diagram showing a sixth embodiment of the present invention.

Fig. 20 is a diagram showing a relationship among an object, a tilt angle of the reflection surface, and a visual field angle on the image capturing device.

Fig. 21(a) is a diagram showing a seventh embodiment of the present invention whereas (b) is a front view of a reflection moving mechanism shown in (a).

Fig. 22 is a block diagram showing an eighth embodiment of the present invention.

Fig. 23(a) through (c) correspond to Fig. 2, showing the eighth embodiment whereas (d) is a view showing the overall image region.

Fig. 24 is a block diagram showing a general model that uses an optical filter featured in a ninth through an eighteenth embodiments of the present invention.

Fig. 25 shows a filter rotating mechanism in the ninth embodiment of the present invention: Fig. 25(a) shows a longitudinal section, whereas Fig. 25(b) shows a front view.

Fig. 26 shows a filter rotating mechanism in the tenth embodiment of the present invention: Fig. 25(a) shows a longitudinal section, whereas Fig. 25(b) shows a front view.

Fig. 27 shows a filter sliding mechanism in the eleventh embodiment of the present invention: Fig. 25(a) shows a longitudinal section, whereas Fig. 25(b) shows a front view.

Fig. 28 is a block diagram showing the twelfth embodiment of the present invention.

Fig. 29 is a block diagram showing the thirteenth embodiment of the present invention.

Fig. 30 shows the fourteenth embodiment of the present invention: Fig. 30(a) shows a front view of a CCD filter, whereas Fig. 30(b) shows a longitudinal section of the filter.

Fig. 31 is a block diagram of a photo-printing unit as the fifteenth embodiment of the present invention.

Fig. 32 is a block diagram showing the sixteenth embodiment of the present invention.

Fig. 33 is a perspective view showing a relationship between a polar filter and a liquid-crystal valuable filter according to the sixteenth embodiment of the present invention.

Fig. 34 shows an arrangement adjacent to an optical block as the seventeenth embodiment of the present invention.

Fig. 35 shows an eighteenth embodiment of the present invention, as a variation to what is shown in Fig. 34.

Fig. 36 is a diagram showing a model of dichromatic reflection from an inhomogenous dielectric surface.

Fig. 37 is a diagram showing a state of inter-reflection on a reflection surface, of reflected light from an object.

Fig. 38 is a diagram showing a process of a first blurring based on a diffused specular reflection on the reflection surface.

Fig. 39 is a diagram for description of blurring by de focusing of the lens.

BEST MODE FOR CARRYING OUT THE INVENTION

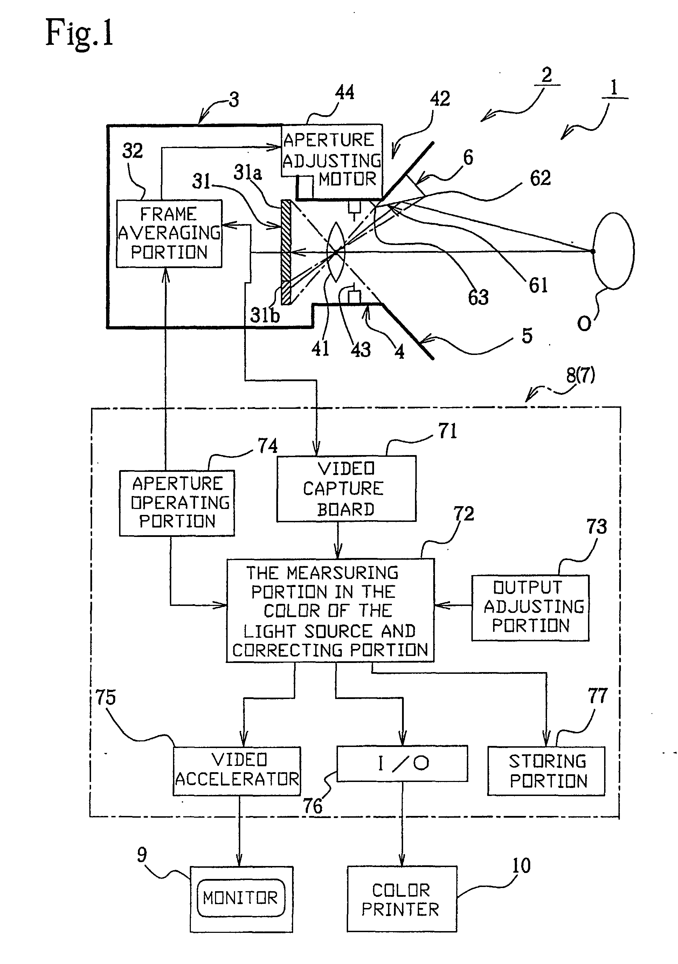

Next, a first embodiment of the present invention will be described with reference to Figs. 1 through 14. First, alphabetical codes to be used in the description will be defined here below:

XMX: Maximum number of pixels in a horizontal row in an image.

YMX: Maximum number of pixels in a vertical row in the image.

NMIN: Minimum value of a reflection surface boundary.

NMAX: Maximum value of a reflection surface boundary.

S: User-defined image brightness coefficient.

x: Horizontal location of a pixel of the image on a coordinate system.

y: Vertical location of the pixel of the image on the coordinate system.

$rd[x][y], gd[x][y], bd[x][y]$ : Direct image signal values in red, green and blue channels respectively.

$rz[x][y], gz[x][y], bz[x][y]$ : Zero image signal values in the red, green and blue channels respectively.

$r[x][y], g[x][y], b[x][y]$: Effective input image signal values in the red, green and blue channels respectively (Main signal values).

rn, gn, bn: Reflection surface average signal values in the red, green and blue channels respectively (Reference signal values).

kr, kg, kb: Color response values in the red, green and blue channels respectively.

krc, kbc: Color response values in a corrupted pixel in the red and blue channels respectively.

$rh[kr], gh[kg], bh[kb]$: Color histogram in a normal pixel in the red, green and blue channels respectively.

$rhc[kr], bhc[kb]$: Color histogram in a corrupted pixel in the red and blue channels respectively.

ii: Number of pixels in the histogram of the corrupted pixels.

i: Number of pixels in the reflected image used for correction.

rm, gm, bm: Upper limit values of a histogram group in normal pixels.

rcm, bcm] : Starting values of a histogram group in corrupted pixels.

$ra[i], ga[i], ba[i]$: Accumulated reflection surface signal values.

s: Constant of proportionality.

ssr, ssg, ssb: Coefficients of proportionality based on a maximum histogram value of the normal pixel histogram.

sr, sg, sb: Constants of proportionality multiplied with the effective input image signal values for obtaining a corrected color.

scr, scb: Constants of proportionality necessary for preventing a color from appearing in the corrupted pixel.

C: Maximum signal correction value for a saturated pixel.

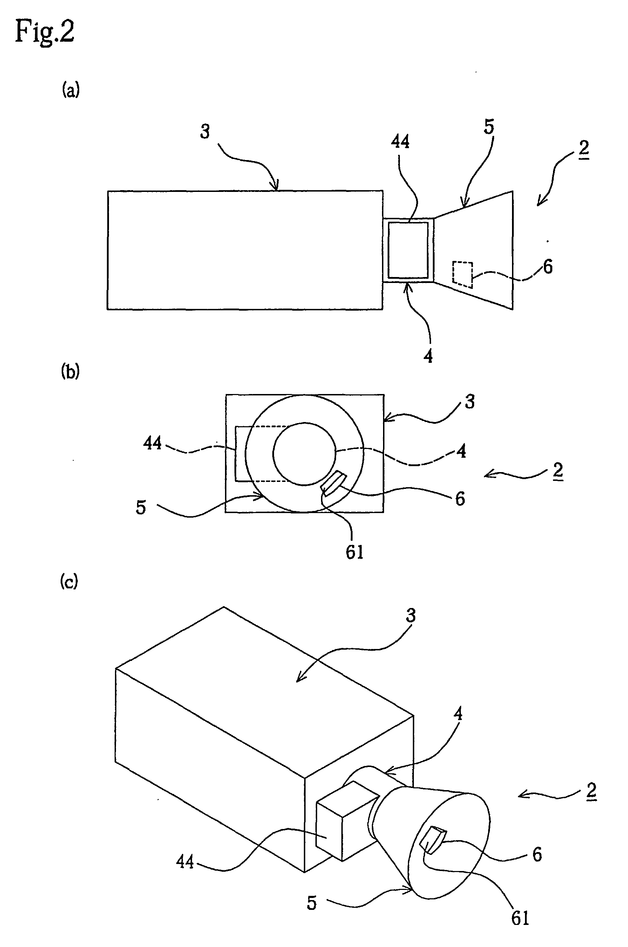

First, an image capturing system 1 shown in Fig. 1 comprises a camera 2 and an image processing unit 7. As shown in Figs. 1 and 2, the camera 2 includes a camera main body 3 mounted with a lens unit 4, a cover 5, and a reflection member 6 mounted inside the cover 5. The camera main body 3 further includes a CCD 31, on which an image is focused through a lens 41 of the lens unit 4. Signals of the image is sent to a personal computer 8 to be described later, as well as processed by a frame averaging portion 32. The frame averaging portion 32 calculates a total amount of incident light coming into the CCD 31, and controls an aperture adjusting motor 44 to decrease an opening of an iris 43 if the amount of incident light coming into the CCD 31 is too large, causing a large number of pixels to be saturated for example, while increasing the opening of the iris 43 if the amount of light is too small. The CCD 31 according to the present embodiment is a color CCD having three light detecting portions with three color filters of red, green and blue for each pixel. The three light detecting portions for red, green and blue assigned to each pixel are assigned to a single CCD device, or may be separately assigned to three CCD devices using a prism though not illustrated.

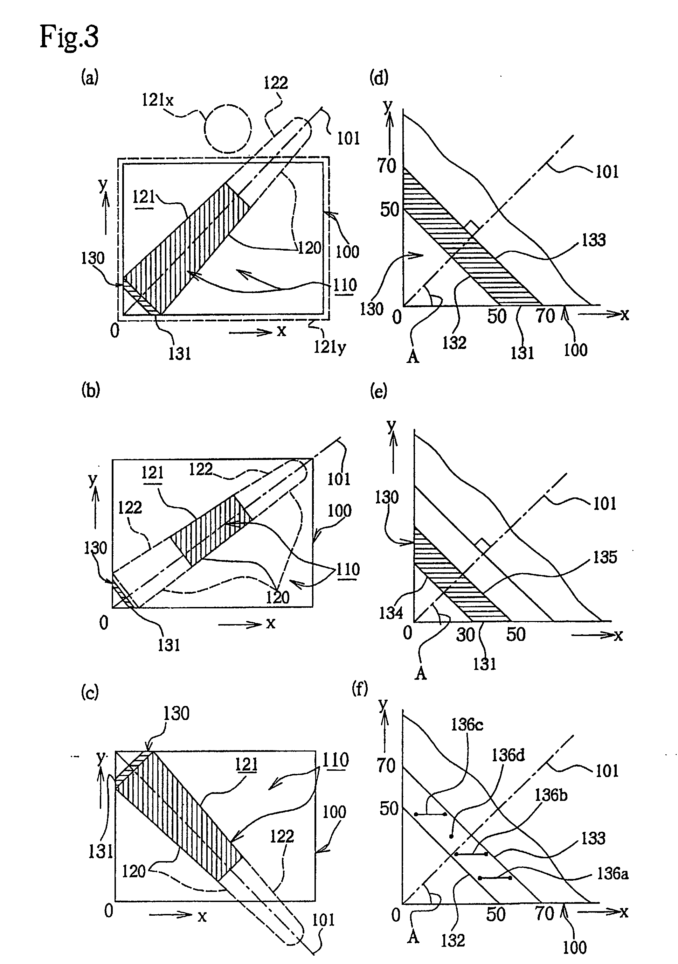

The cover 5 prevents light from coming in from other than a maximum visual field determined by the CCD 31 and the lens 41 and from an adjacency of the maximum visual field. According to the present embodiment, the reflection member 6 having a shape of wedge is attached inside the cover 5, providing a flat reflection surface 61 inside the cover. For example, an image of O passes the lens 41 directly, focusing on amain image capturing portion 31a of the CCD 31, whereas an image of O which reaches the reflection surface 61 receives the first blurring described earlier on the reflection surface 61, and then receives the second blurring due to a proximity of the reflection surface 61 to the lens 41, before reaching a reference image capturing portion 31b of the CCD 31. As shown in Fig. 2 (b), Figs. 3 (a) and (d), the reflection member 6 is provided at a location corresponding to a corner portion of an overall image region 100 so that light reflected by the reflection surface 61 forms a reference image portion 130 at a lower corner portion of the overall image region 100. A main image 110 corresponds to the main image capturing portion 31a whereas the reference image portion 130 corresponds to the reference image capturing portion 31b. An image at a reflection surface rear end 63 of the reflection member 6 locates near the lower corner portion of the overall image region 100 whereas an image at a reflection surface front end 62 of the reflection member 6 diffuses between a reflection surface capturing portion 120 and the reference image portion 130.

The reflection member 6 is made of aluminum for example. The reflection surface 61 is flat, and is slightly matted so as to reflect light dispersedly. The reflection surface 61 may of course be made of white or gray paper for example, or the reflection surface 61 may be constituted by a material which follows the NIR theory described earlier.

Reference is now made to Fig. 3. For convenience of description, a scene to be captured and the overall image region 100 are shown in superimposition with each other; thus the main scene 110 is also the main image portion. Incident light from O to the reflection surface 61 reflects at a same angle as an incident angle, and then reaches the CCD 31. Because of the blurring process described above, light coming from the surface of the reflection surface front end 62 to the CCD 31 exists in a gradually widening path. Consideration will be made here, however, only to a main light path in which the light has the highest brightness. A reflection surface capturing portion 120 is determined by an angle of direction of the reflection surface front end 62 and the main light path. Accordingly a setting is made so that the reflection surface capturing portion 120 has a center passed by a reference main axis 101 crossing a lower side of the overall image region 100 at an angle of 45 degrees.

An image from the reflection surface 61 to the reflection surface capturing portion 120 appears as the reference image portion 130 at the lower corner of the overall image region 100. The reflection surface capturing portion 120 can be divided into a reference scene 121 and an unused scene 122 by selecting, for example, from the reference image portion 130 a selected reference portion 131 sandwiched by a selected portion inner boundary 132 and a selected portion outer boundary 133 each being vertical to the reference main axis 101, by using expressions to be described later. According to the present embodiment, the overall image region 100 has a horizontal resolution of 680, and a vertical resolution of 480. Accordingly, a total number of pixels is a product of the two numbers, or 326400 pixels. With this arrangement, it was learned that the reference image portion 130, i.e. the blurred image from the reference surface, amounts only to about 3% of the whole. According to the present embodiment, a region defined by x, y each greater than 50 and smaller than 70 is used as the selected reference portion 131. It shouldbe noted here, however, that these values only represent examples, and therefore do not bind the present invention.

The reference scene may of course be an outside-and-adjacent region of the overall image region 100 indicated by a code 121x in Fig. 3 (a), or a region including the overall image region 100 indicated by a code 121y. According to the present embodiment, since the cover 5 is rotatable around the lens unit 4, the reflection member 6 may be moved toward an upper corner of the overall image region 100 for example, so that the reference scene 121 covers a different region as shown in Fig. 3(c). Further, the reflection member 6 may be moved between two sides of the overall image region 100 so that the reflection member 6 (reference scene 121) is placed out of the overall image region 100.

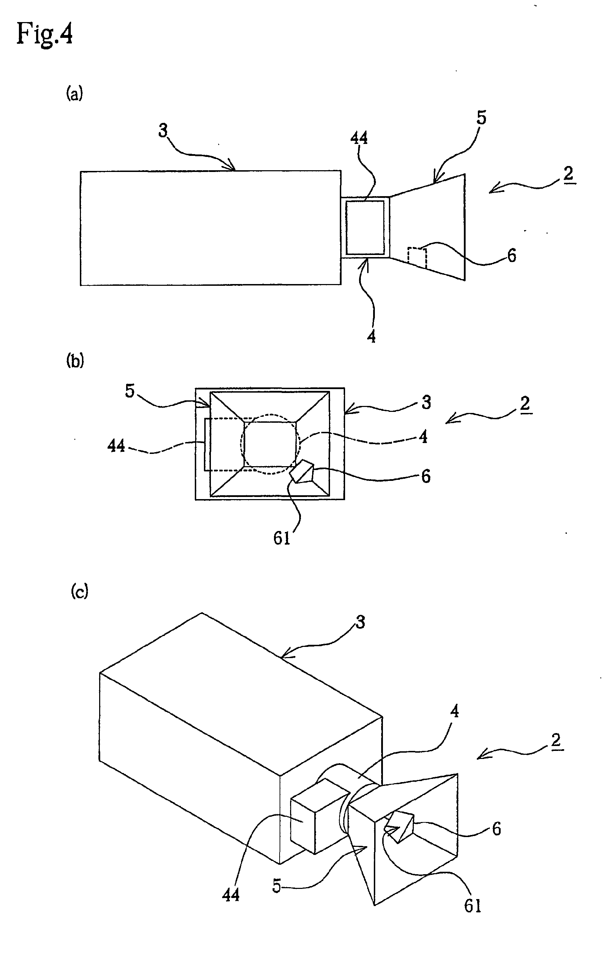

Fig. 3(b) show a case in which the reflection surface 61 is disposed in the cover 5 so that reference main axis 101 represents a diagonal line of the overall image region 100. Further, in this example, an intermediate portion of the reflection surface capturing portion 120 is selected as the reference scene 121. In this case, a selected portion inner boundary 134 and a selected portion outer boundary 135 are each given a smaller value than that of the previous example, i.e. greater than 30 and smaller than 50 for example. According to an arrangement shown in Fig. 3(f), the reference signal can be obtained from a portion between the selected portion inner boundary 132 and the selected portion outer boundary 133 as shown in scan lines 136 a ~ c and a selected point 136d, in order to obtain the reference image. In this way, by limiting the reference scene 121 to a center portion of the main scene 110, adverse affect from different light generated at an end portion of the main scene 110 can be reduced. The cover 5 may be formed in a shape of a frustum as shown in Fig. 4 if the location of the reflection surface 61 is only changed from one corner portion to the opposite corner portion (180-degree turning) of the overall image region 100.

Next, description will cover the personal computer 8 as a component of the image processing unit 7. According to this personal computer 8, the image is loaded to the computer via the video capture board 71 from the CCD 31. The video capture board 71 uses an 8-bit frame buffer, and therefore, a dynamic range for signal values and color response values is 0 ~ 255. According to the present specification, a maximum value of the dynamic range is defined as D, and thus D = 255 according to the present embodiment. The video capture board 71 uses a timer for converting a coordinate location of the image signal into time, so that a processing to be described hereafter can be performed.

Specifically, there is provided a correcting portion 72, which serves as the light-color measuring portion by using the reflection surface and in which a time gate is used when processing the image signal so as to limit the selected reference portion 131 sandwiched by the selected portion inner boundary 132 and the selected portion outer boundary 133. The correcting portion 72 performs a correcting operation to be described later. An output adjusting portion 73 is for adjusting a user-defined image brightness coefficient S of the correcting portion 72 to be described later.

An aperture operating portion 74 completely closes the iris 43 via the frame averaging portion 32 and the aperture adjusting motor 44 for a zero calibration of the CCD 31, as well as controls a zero calibration at the correcting portion 72. The closing operation of the iris 43 and the zero calibration by the aperture operating portion 74 is made manually as well as automatically at least upon starting of operation of the camera 2.

An output from the correcting portion 72 is displayed in the monitor 9 via a video accelerator 75, as well as outputted from a color printer 10 via an I/O 76, and further stored at a storing portion 77. The storing portion 77 includes such a component as a fixed or removable hard disc, a memory device, and a flexible disc.

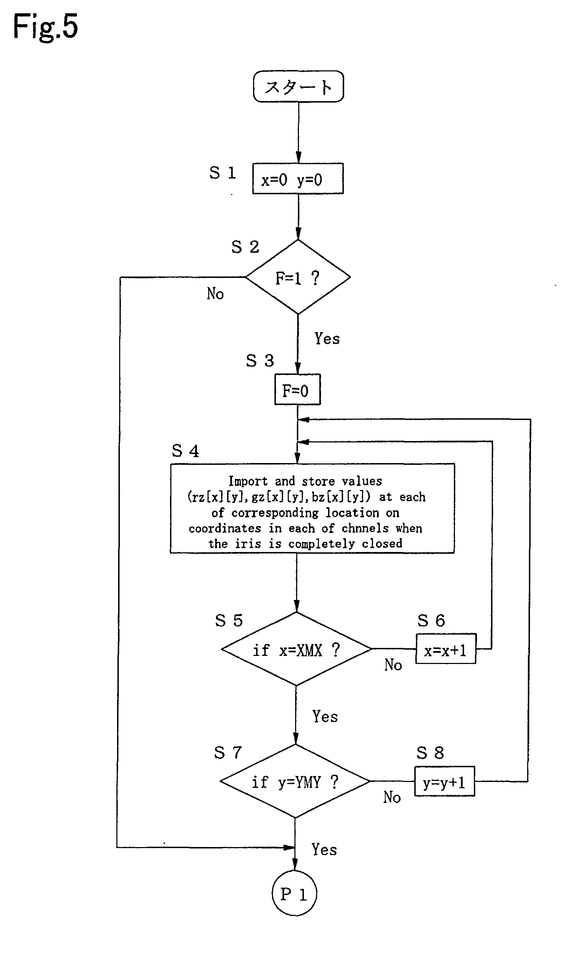

Next, reference will be made to Figs. 5 through 9 for description of a processing procedure in said light-color measuring portion and the correcting portion 72.

Fig. 5 shows a routine for obtaining a zero image signal value in each of the red, green and blue channels when the iris is completely closed. First, in step S1, each of x and y is given a value 0 for starting a scanning from the point of origin. In step S2, a determination is made if there is any flag raised due to the operation of the aperture operating portion 74. If the iris 43 has been completely closed by the aperture operating portion 74, a flag is raised, making F = 1. In this case, determination is made that the zero image must be obtained. Then, step S3 is executed to make F = 0, i.e. resetting the flag, and the process goes to step S4, where the zero image signal value in each of the red, green and blue channels $rz[x][y]$, $gz[x][y]$, $bz[x][y]$ are obtained. Next, until the maximum pixel numbers XMX, YMX in horizontal and vertical directions are achieved respectively as shown in steps S5 and S7, x and y are increased by an increment of 1 respectively in steps S6 and S8. Thus, the zero image signal values $rz[x][y]$, $gz[x][y]$, $bz[x][y]$ which represent a dark noise of the camera, are obtained for all of the coordinate locations of the overall image region 100.

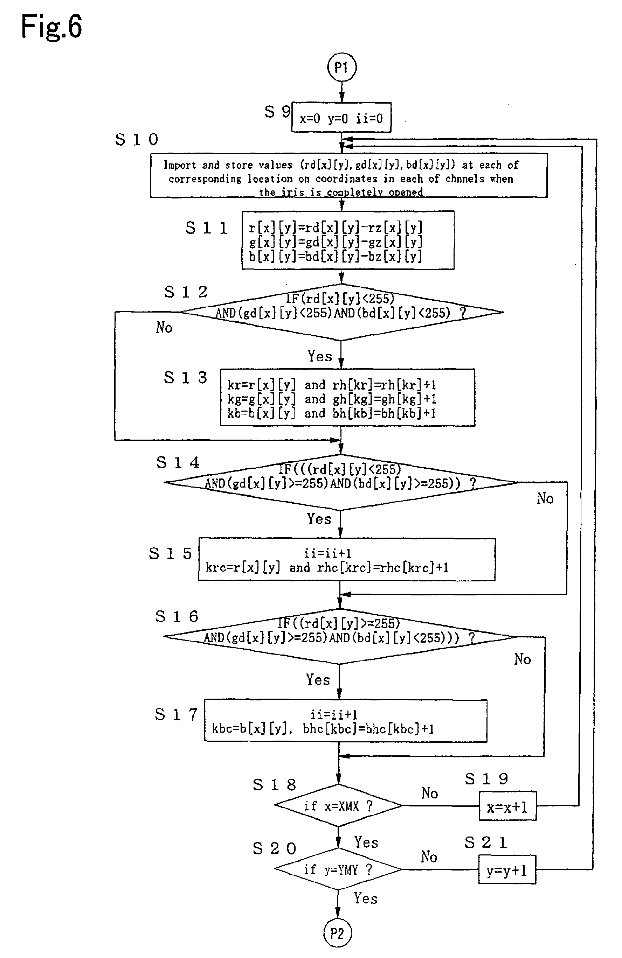

Fig. 6 shows a routine in which a zero calibration and histogram processing of the input signals are performed. Again in this routine, the coordinate location is reset in step S9, and then all the pixels within the overall image region 100 are scanned in steps S18 ~ S21. In step S10, direct image signal values in each of the red, green and blue channels $rd[x][y]$, $gd[x][y]$, $bd[x][y]$ are stored. Then, in step S11, in order to cancel the dark noise, the zero image signal values $rz[x][y]$, $gz[x][y]$, $bz[x][y]$ are subtracted from the direct image signal values $rd[x][y]$, $gd[x][y]$, $bd[x][y]$ for each of the red, green and blue channels, thereby effective input image signal values (main signal values) $r[x][y]$, $g[x][y]$, $b[x][y]$ are obtained. It should be noted here that there is no need for providing steps S1 ~ 11 or the aperture operating portion 74 if the zero calibration of the input signals for elimination of the dark noise has already been performed in the camera.

In step S12, a determination is made if all of the direct image signal values $rd[x][y]$, $gd[x][y]$, $bd[x][y]$ in the red, green and blue channels are saturated (255) or not (smaller than 255). If not saturated, step S13 is executed, in which color response values kr, kg, kb in the red, green and blue channels are substituted respectively by the values of effective input image signal values $r[x][y]$, $g[x][y]$, $b[x][y]$. Then, color histogram $rh[x][y]$, $gh[x][y]$, $bh[x][y]$ of the normal pixels in the red, green and blue channels are accumulated respectively.

If at least two of the direct image signal values $rd[x][y]$, $gd[x][y]$, $bd[x][y]$ in the red, green and blue channels are saturated, an operation to a corrupted pixel is performed in steps S14 ~ S17. The corrupted pixel herein means a pixel having only one of the red, green and blue colors not saturated whereas the other two colors are saturated.

First, if the direct image signal values $gd[x][y]$, $bd[x][y]$ in two color channels, i.e. in the green and blue channels, are saturated whereas the direct image signal value $rd[x][y]$ in the red channel is not saturated as indicated by "Yes" in step S14, the number of pixels ii in a histogram of the corrupted pixels is accumulated in step S15, a color response value krc of the corruptedpixel is set to the effective image signal value $r[x][y]$ of the red channel, and then the color histogram $rhc[krc]$ of the corrupted pixels in the red channel is accumulated.

On the other hand, if the direct image signal values $rd[x][y]$, $gd[x][y]$ in two color channels, i.e. in the red and green colors, are saturated whereas the direct image signal value $bd[x][y]$ in the blue channel is not saturated as indicated by "Yes" in step S16, the number of pixels ii in the histogramof the corrupted pixels is accumulated in step S17, a color response value kbc of the corrupted pixel is set to the effective image signal value $b[x][y]$ of the blue channel, and then the color histogram$bhc[kbc]$ of the corrupted pixels in the blue channel is accumulated.

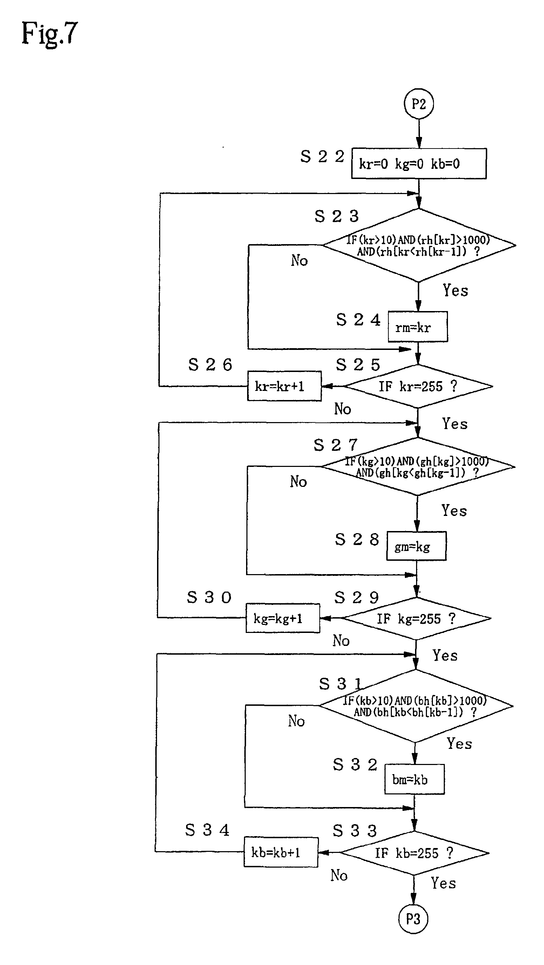

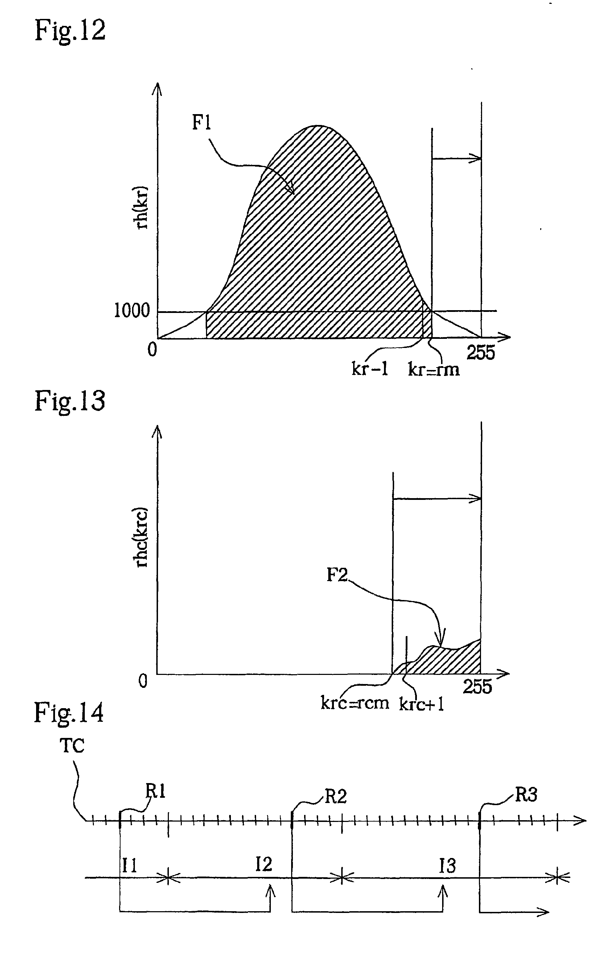

Fig. 7 shows a routine in which upper limit values rm, gm, bm of a histogram group F1 in the normal pixels are obtained. Specifically, first, the color response values kr, kg, kb in the red, green, and blue channels are reset in step S22. Then, operations shown in steps S25, S26, S29, S30, S33, and S34, are repeated sequentially until the maximum value of the dynamic range started from zero achieves 255. By repeating the operations in steps S23 and S24 with the kr increased by an increment of one, the upper limit value rm of the histogram group in the normal pixels in the red channel is obtained. The upper limit value rm = kr is, as shown in Fig. 12, the greatest value of the kr when kr is greater than 10 and the histogram rh is greater than 1, 000. Similarly, by repeating operations in steps S27, S28 and S31, S32, the upper limit values gm, bm of the histogram group F1 in the normal pixels in the green and blue channels, are obtained respectively. It should be noted here that the procedure for defining rm, gm, bm is not limited to the routine described above, and the number 1000 may be different number depend on the image size herein after the same as this.

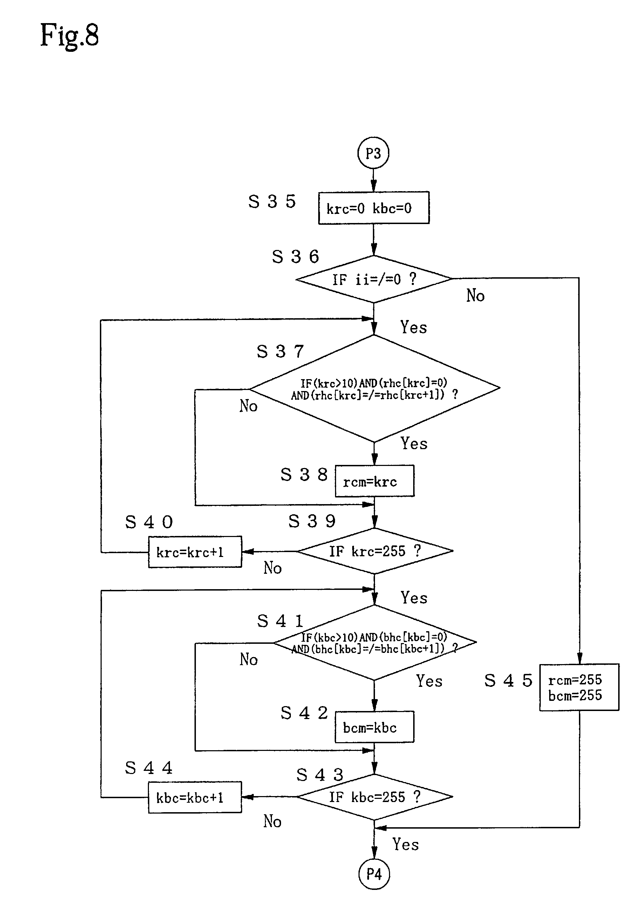

Fig. 8 shows a routine in which starting values rcm, bcm of a histogram group in the saturated pixels are obtained. Specifically, first, the color response values krc, kbc of the corrupted pixels in the red and blue channels are reset in step S25. Then, operations shown in steps S39, S40, S43 and S44 are repeated sequentially until the value of the dynamic range started from zero achieves 255. By repeating the operations in steps S37 and S38 with the krc increased by an increment of one, the starting value rcm of the histogram group F2 in the corrupted pixels in the red channel is obtained. The starting value rcm = krc is, as shown in Fig. 13, the smallest value of the krc when krc is greater than 10 and the histogram rh begins to exceed 0. Similarly, by repeating operations in steps S41, S42, the starting value bcm of the histogram group F2 in the corrupted pixels in the blue channel is obtained. It should be noted here that if ii has a value of zero in S36, then there is no corrupted pixels, and therefore each of rcm, bcm is given a vale 255 in 345.

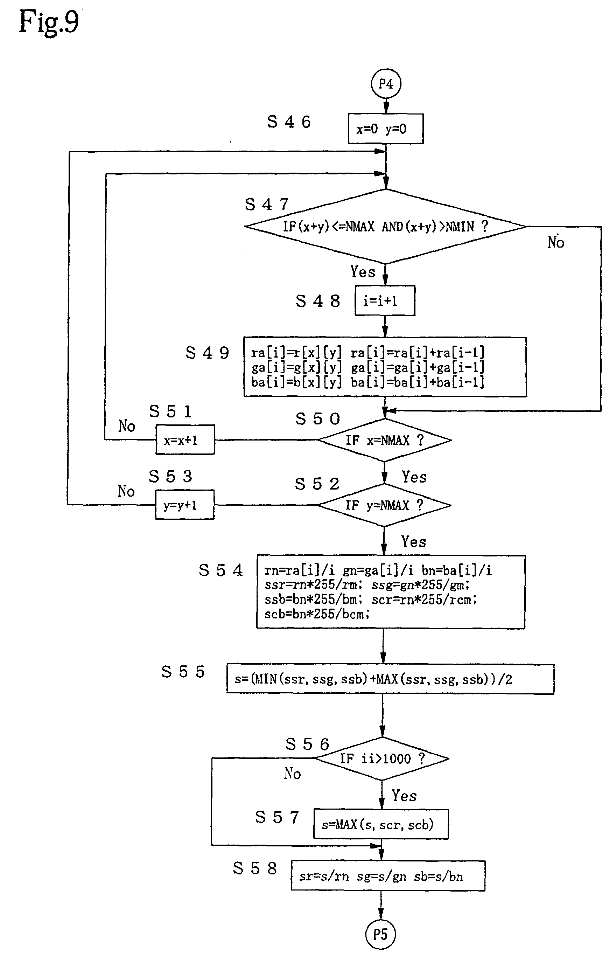

Fig. 9 shows a routine in which the reflection surface average signal values rn, gn, bn in red, green and blue channels are obtained, from which sr, sg, sb, i.e. the constants of proportionality to be multiplied with the effective input image signal values for obtaining the corrected color are calculated. As shown in Fig. 3(d), the reference image portion 130 adopted here is a portion between the selected reference portion 131 and the selected portion inner boundary 132. According to this figure, NMAX is 70, whereas NMIN is 50. Step S46 resets x and y, then S47 determines condition for selecting the reference image portion 130. Then, operations in S48 and S49 are repeated, increasing x and y by an increment of one, until S50, S51, S52 and S53 find that x and y have reached NMAX. S48 accumulates the number i of pixels in the reflected image used in the correction, whereas S49 obtains the accumulation ra[i], ga[i], ba[i] of the reflection surface signal values.

S54 obtains the reflecting surface average signal values (reference signal values) rn, bn, bn, in red, green and blue channels, by dividing each of the accumulation of the reflecting surface signal values ra[i], ga[i], ba[i] by i. Further, the coefficients of proportionality ssr, ssg, ssb based on the histogram maximum values of the normal pixel histogram are obtained: Specifically, the reflecting surface average signal values rn, gn, bn in the red, green and blue channels are each multiplied by the maximum value of the dynamic range D = 255, and then divided respectively by the upper limit values rm, gm, bm of the histogram groups in the normal pixels. Further, constants of proportionality scr, scb necessary for prohibiting colors from appearing in the corrupted pixel are obtained in a similar operation: Specifically, the reflecting surface average signal values rn, bn of the corrupted pixel in the red and blue channels are each multiplied by the maximum value of the dynamic range D = 255, and then divided respectively by the starting values rcm, bcm of the histogram groups in the corrupted pixels. A significance of S54 is, for example, to enable more efficient use of the frame buffer by bringing rm and rcm in Figs 12, 13 closer to 255. By setting these constants of proportionality, it also becomes possible to reduce extreme difference in intensity between a highlighted portion or an adjacency thereof and a surrounding portion.

S55 obtains a constant of proportionality s by averaging a maximum value and a minimum value selected from ssr, ssg, ssb, i.e. the coefficients of proportionality based on the maximum histogram values of the normal pixel histogram. However, the constant s may be set to the maximum or minimum value of the coefficients ssr, ssg, ssb. In steps S56, S57, the number of pixels ii in the corrupted pixel histogram is checked. Specifically, if the number exceeds 1000, the step determines that the corrupted pixels exist at a non-negligible level, and then selects a largest value from said s and scr, scb, i.e. the constants of proportionality necessary for preventing colors from appearing in the corrupted pixels, as a new value for the coefficient of proportionality s. The coefficient s thus determined is then divided by each of the reflection surface average signal values rn, gn, bn in the red, green and blue channels, to obtain sr, sg, sb, i.e. the constants of proportionality to be multiplied with the effective input image signal values for obtaining the corrected color. It should be noted here that the value 1, 000 was selected as a figure which roughly represents 0.3% of the total number of pixels of the overall image region, and may be varied.

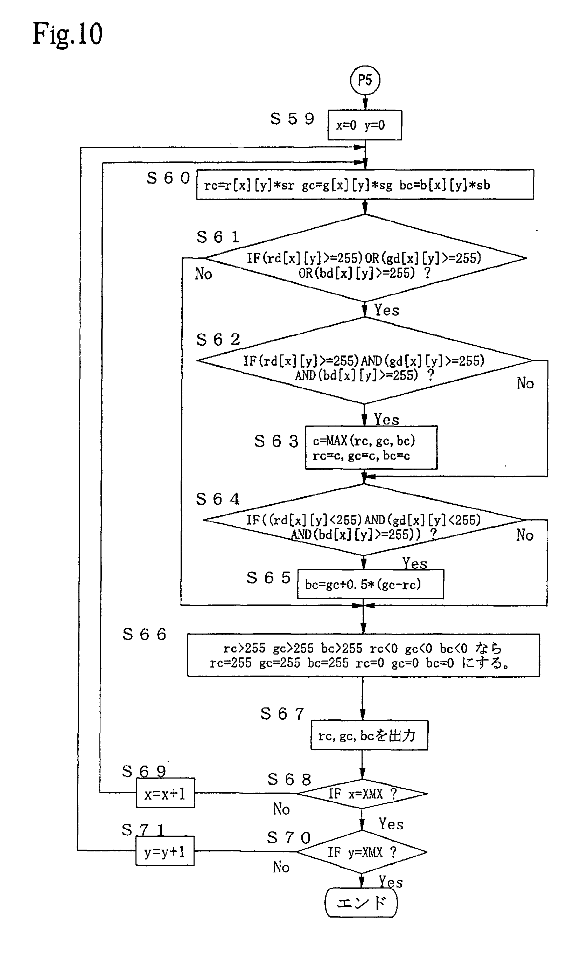

Fig. 10 shows an algorithm in which the corrected image signal values (corrected signal values) rc[x][y], gc[x][y], bc[x][y] in the red, green and blue channels are obtained. In addition, correcting operation is made to such values as exceeding the dynamic range 255. In this routine again, the coordinate locations are reset in S59, and then scanning is made to all of the pixels in the overall image region 100 in S68 ~ S71. Specifically, S60 multiplies the effective input image signal values r[x][y], g[x][y], b[x][y] in the red, green and blue channels with respective constants of proportionality sr, sg, sb to obtain the corrected image signal values rc[x][y], gc [x][y], bc[x][y] in the red, green and blue channels. Since this calculation process only uses multiplication, a very high-speed processing can be made as compared to the conventional method in which dividing operations are used.

It should be noted here that in the above operation, both of the effective input image signal values and the constants of proportionality sr, sg, sb may be drawn from a same frame. Further, there is another option, as shown in the timing chart TC in Fig. 14. Specifically, the constants of proportionality sr, sg, sb are obtained from a first and a second reference frames R1, R2 of a first and second reference frame groups I1, I2, and these sr, sg, sb are multiplied respectively with the effective input image signal values r[x] [y], g[x][y], b[x][y] drawn from a plurality of frames in each of the second and a third reference frame groups I2, I3. With such an arrangement, the routine for calculating the constants of proportionality sr, sg, sb will not become a bottleneck, increasing further the processing speed.

S61 provides a bypass to skip S62 ~ S65 if none of the effective input image signal values r[x][y], g[x][y], b[x][y] in the red, green and blue channels are 255 or greater. If S62 finds that all of the direct image signal values rd[x][y], gd[x][y], bd[x][y] in the red, green and blue channels are 255 or greater, then S63 selects the greatest value from the corrected image signal values rc[x][y], gc[x][y], bc[x][y] in the red, green and blue channels, as the value of c. The corrected image signal values rc, gc, bc are then each replaced by the value of c.

S64 executes S65 if each of the direct image signal values rd[x][y], gd[x][y] in the red and green channels are smaller than 255 and if the direct image signal value bd[x] [y] in the blue channel is 255 or greater. In S65, corrected image signal value bc in the blue channel is re-corrected by analogy using the signal values in red and green colors. Specifically, the corrected image signal value bc in the blue channel is obtained by halving a difference between the direct image signal values rd[x][y] and gd[x][y] in the red and green channels, then adding thereto the direct image signal value gd[x][y] in the green channel. According to the experiments conducted by the inventor, this method of analogy gives very good results.

S66 substitutes the corrected image signal values rc[x][y], gc[x][y], bc[x][y] in the red, green and blue channels with the value 255 if exceeding 255, whereas the substitution is made with the value 0 if smaller than 0. Then, S67 outputs the corrected image signal values rc[x][y], gc[x][y], bc[x][y] in the red, green and blue channels which includes all of the necessary corrections selected from those described above. Then, the whole routine comes to an end when S68 and S70 complete all the scanning to the overall image region 100.

Each of the functions achieved by the above image processing unit can be realized by a computer loaded with a program stored in a flexible disc, a hard disc, a CD-ROM or other storing media. Of course, the functions can also be realized by a single or plurality of IC chips, or an electric circuit.

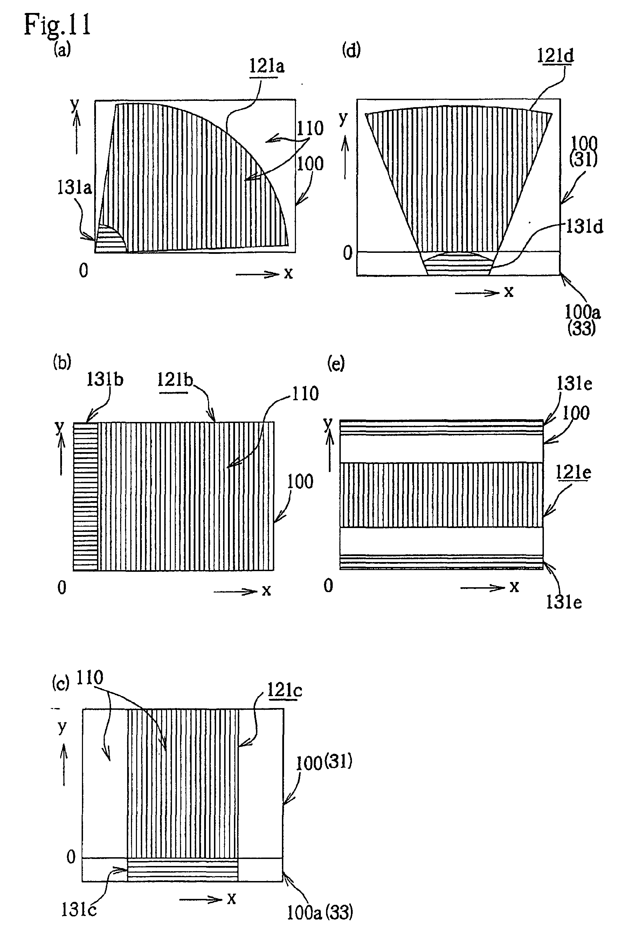

Now, reference will be made to Fig. 11 for describing a variation to the reflection surface 61, main scene 110 and the selected reference portion 131 according to the present embodiment.

According to the embodiment described above, the reflection surface 61 is a flat surface. By making the reflection surface 61 a convex surface, a reference scene 121a can be made larger for the size of a selected reference portion 131a as shown in Fig. 11(a). Further, by making the reflection surface 61 an elongated strip disposed at a lateral end of the overall image region 100 instead of the wedge disposed at the corner portion of the overall image region 100, a selected reference portion 131b can be formed in a vertical strip as shown in Fig. 11(b).

Fig. 11(c) shows a case in which the overall image region 100 is accompanied by 100a disposed below, including a selected reference portion 131c as a part, and the color of light source is obtained from a reference scene 121c. Further, Fig. 11(d) shows a case in which the reflection surface 61 is made convex similarly as in Fig. 11(a), thereby providing a reference scene 121d having a greater width than is the selected reference portion 131d for obtaining the color of light source. It .should be noted here that in each of the cases (c) and (d), there is provided a second CCD 33 for 100a, as a separate CCD 31 from the CCD 31 provided for the overall image region 100.

Fig. 11(e) shows a case in which the overall image region 100 is accompanied by laterally elongating selected reference portions 131e, 131e respectively provided above and below. The color of light source is gathered from a reference scene 121e placed at a center portion, to either one of the selected reference portions 131e. This variation assumes a case in which the image is taken as a laterally elongated panorama image. However, differing from a conventional panorama image capturing, in which a part of the image capturing region is masked in order to obtain images in the selected reference portions 131e, 131e, only a part of a finder is masked so that only an image that appears on the finder is elongate. It should be noted here that relationship between the reference scene 121 on the CCD and the selected reference portion 131 described for each of the cases in Fig. 11 are also applicable for cases in which the image capturing element is a film.

Next, another embodiment of the present invention will be described. It should be noted that members identical with or similar to those already appeared in the first embodiment are indicated by the same or similar codes.

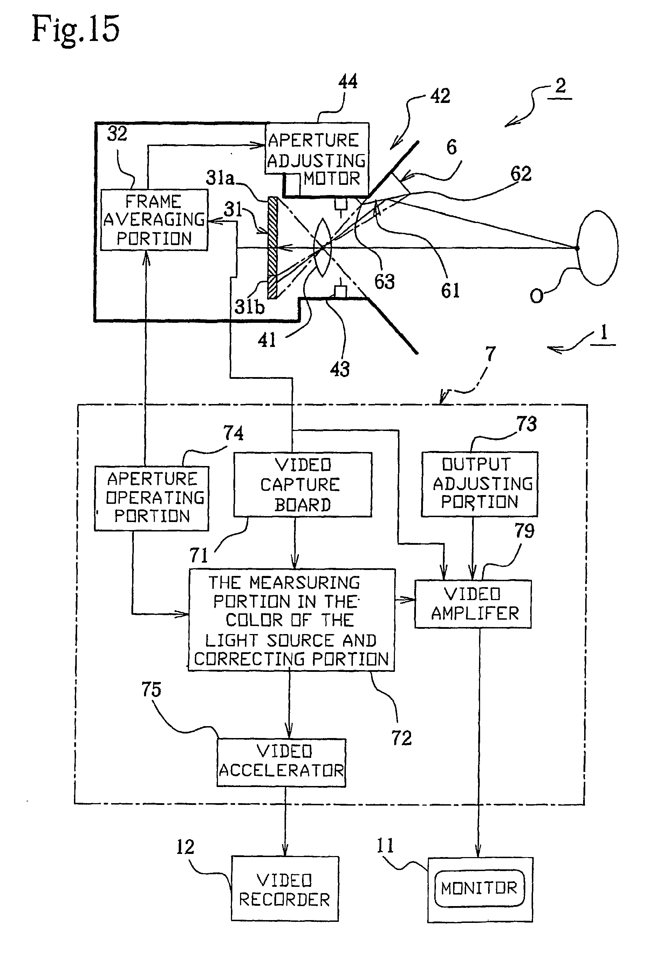

Fig. 15 show a second embodiment, in which the main image sent from the main image capturing portion 31a of the CCD 31 is directly color-corrected by an analog or digital video amplifier 79, and then displayed in a monitor unit 11. The calculation of the constants of proportionality sr sg, sb by the correcting portion 72 is made by using the first and the second reference frames R1, R2 shown in Fig. 14, for correcting the first and the second reference frame groups I2, I3 at a later time. An output adjusting portion 73 is an operating portion for adjustment of an output from the video amplifier 79. This arrangement offers an advantage that the main image is corrected at video-rate processing speed. It should be noted here that the image obtained by a detailed correction based on the main image and the reference image both drawn from the same frame can be recorded by a video recorder 12 via a video accelerator 75.

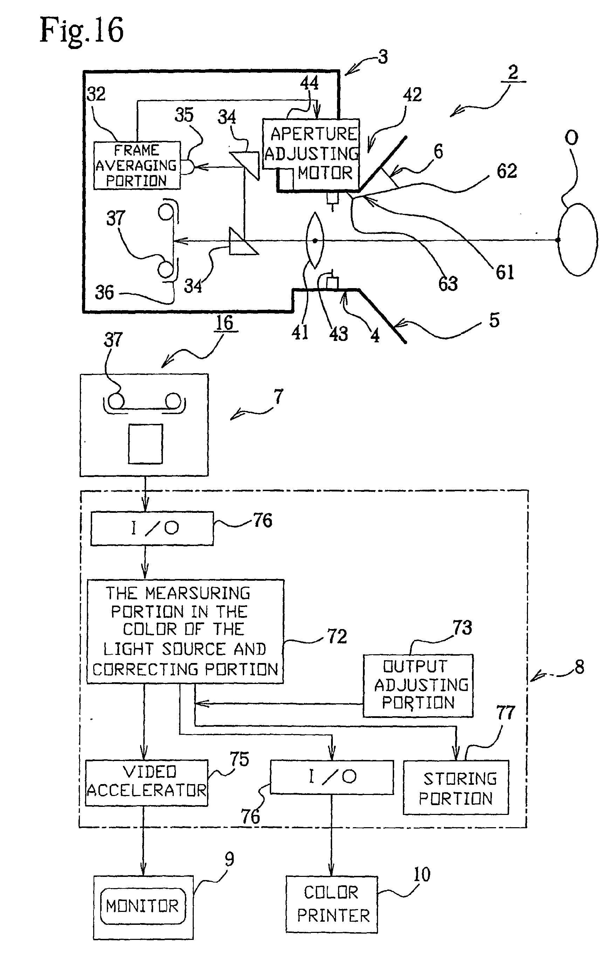

Fig. 16 shows a third embodiment, which differs from the other embodiments for example a silver salt film, in that a chemical color film 37 is used as the image capturing device. Specifically, according to the present invention, the color channels of the image capturing device and light detecting element may not be physically separate from each other but may be a substance which forms a plurality of color channels through change in characteristics caused by a chemical reaction. The color film 37 is detachably stored in a film storing portion 36.

The incident light from the lens 41 is split by a prism 34 to reach the color film 37 and the light detecting element 35. The light detecting element 35 transmits image data to the frame averaging portion 32 for control of the iris 43 and the aperture adjusting motor 44. The present embodiment differs from the other embodiments in that the image processing unit 7, which is a separate unit from the camera 2, has a personal computer 8 and a film scanner 16. The color film 37 is developed, set in the film scanner 16, and scanned for the image data including the main image and the reference image. The data is then sent to an I/O 76. The processing operation performed to the image signals thereafter is the same as in the other embodiments.

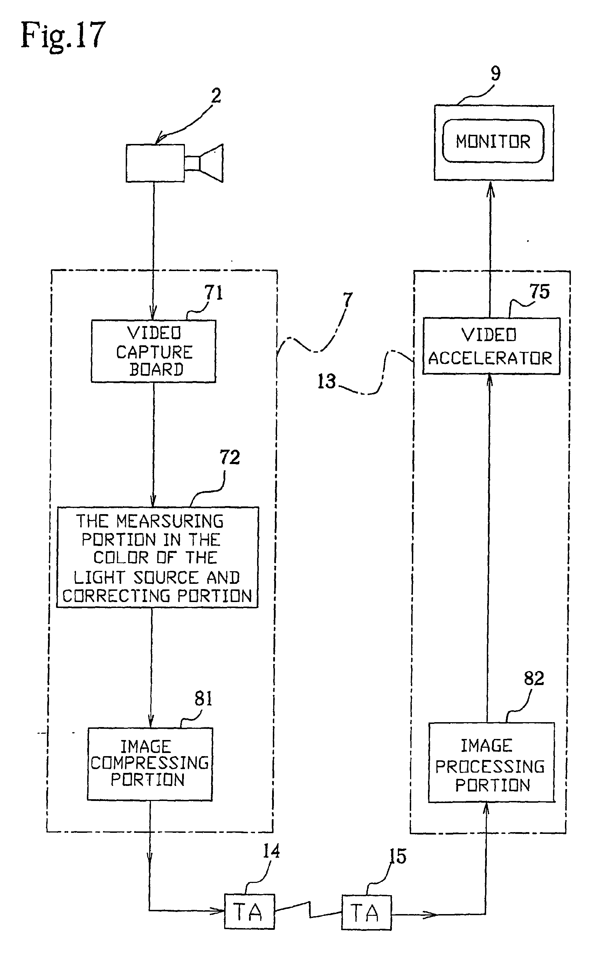

Fig. 17 shows a fourth embodiment, in which the image is sent via a communication system, from the camera 2 connected to the image processing unit 7, to the monitor 9 connected to a second personal computer 13 as another image processing unit. The corrected image obtained through the same process as in the other embodiments described above is compressed by an image compressing portion 81 using a method such as JPEG. According to the present embodiment, a better result can be expected than the case performing the color correction after the image compression, since the color data is not partially lost.

The image signals after the correction and compression is transmitted via a communication terminal 14, a communication terminal 15, and Internet or a telephone line, into an image processing portion 82, and the video accelerator 75, and then displayed in the monitor 9. It should be noted here that a two-way communication becomes possible by providing the above arrangement in each of the two computers.

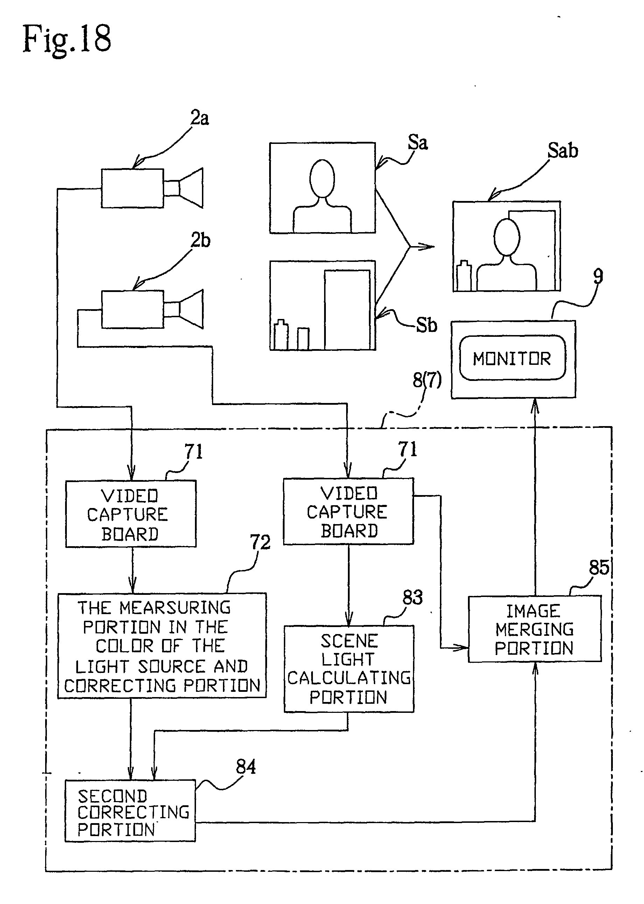

Fig. 18 shows a fifth embodiment, in which a first and a second cameras 2a, 2b capture images A, B and images Sa, Sb respectively for feeding into respective video capture boards 71, 71. For example, the image A, Sa is an image taken in a studio and includes an image of an announcer whereas the image B, Sb is an image of an outdoor view such as a sky at sun set. The image A, Sa is color-corrected by the correcting portion 72 according to the procedure described above. On the other hand, from the image B, Sb, the color of light source in the image B,Sb is obtained by a scene light calculating portion 83 through the function of the reflection surface. Then, a second color correction is performed by a second correcting portion 84, by multiplying the color of light source with the image A, Sa which is already color-corrected. The resulting image is finally merged with the image B, Sb by an image merging portion 85, for display in the monitor 9 of the synthesized image A, B, Sab which has a more natural color balance.

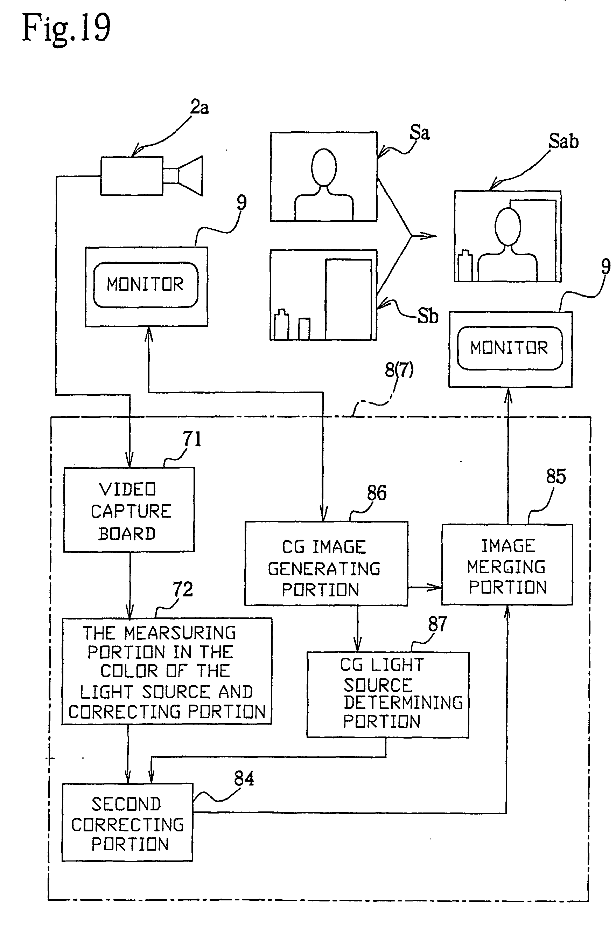

Fig. 19 shows a sixth embodiment, which differs from the fifth embodiment in that the image B, Sb is a computer-generated image. The image B, Sb can be displayed in the monitor 9 via a CG image generating portion 86. Further, a CG light source determining portion 87 obtains a color of virtual light source in the CG image generating portion 86, for the second color correction through the multiplication with the corrected image A, Sa by the second correcting portion 84. After receiving the two color-corrections performed as above, the image A, Sa is merged with the image B, Sb by the image merging portion 85 for display in the monitor 9. In the resulting image A, B, Sab, the computer-generated landscape is naturally blended with the real shot of a person. It should be noted here that the color of light source obtained in the fifth and sixth embodiments for the first and the second color corrections maybe obtained through another method such as the white patch method, than from the reflection surface.

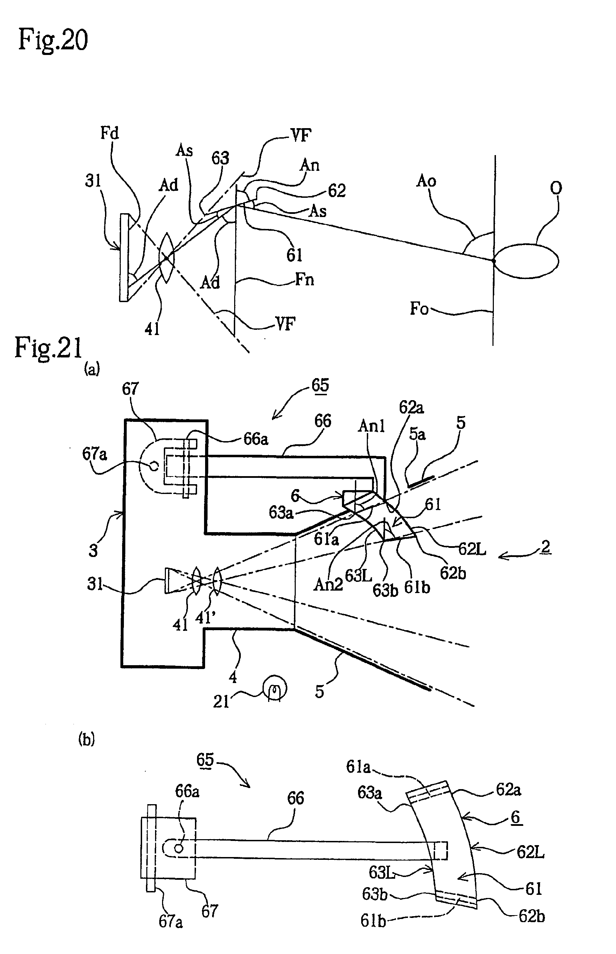

Figs. 20, 21 show a seventh embodiment, in which the lens 41 is a zoom lens with a changeable focal length, according to which location and angle of the reflection surface 61 are changed. Fig. 20 shows how the location and the angle are determined. Specifically, first, the CCD 31 and the lens 31 determine amaximum visual field VF. After placing a reflection surface rear end 63 of the reflection surface 61 at a certain location on the maximum visual field VF, a reflection surface angle An of the reflection surface 61 is determined in accordance with the following relationships:

Specifically, there are defined an image capturing device surface Fd as a plane on the surface of the CCD 31, a reflection location apex surface as a surface parallel to the image capturing device surface Fd passing a reflection point on the reflection surface 61, and an object surface Fo as a surface parallel to the image capturing device surface Fd passing an object O. Now, on a left side of the reflection point apex surface Fn, the reflection angle An has a following relationship with the other angles:

$$As = \pi - An - Ao \qquad (7)$$

Further, a following expression is true below the reflection surface 61:

$$2As = \pi - Ad - Ao \qquad (8)$$

And, these two expressions can be merged for the reflection angle As into a following expression:

$$\pi - An - Ao = (\pi - Ad - Ao)/2 \qquad (9)$$

The above expression can further be simplified for the reflection surface angle An into a following expression:

$$An = \pi/2 + Ad/2 - Ao/2 \tag{10}$$

Here above, Ao/2 can be regarded as a constant because the object angle Ao changes little in accordance with the location of the object O. The reflection surface angle An is determined by the visual field angle Ad, whereas the visual field angle Ad is determined by the location of the maximum visual field VF. Therefore, the reflection surface rear end 63 of the reflection surface 61 and the visual field angle Ad are determined uniquely by the focal length of the lens 41.

Now, reference will be made to Figs. 21(a) and (b) for description of the camera 2 provided with the reflection surface 61 capable of continuously changing the reflection surface 63 and the reflection surface angle An. When the lens 41 is at a location indicated by solid lines in Fig. 21(a), a reflection surface 61a, which is a portion of the reflection surface 61, is determined by the reflection surface rear end 63a and a reflection surface angle An1. When the lens 41' has a longer focal length and therefore at a location indicated by dashed lines, the reflection surface rear end 63b of the reflection surface 61b is farther away from the lens 41 than is the reflection surface rear end 63a whereas the reflection angle An2 is greater than the reflection surface angle An1. Specifically, the reflection surface 61 has a reflection surface front-end line and a rear-end line, 62L, 63L, along which there is disposed reflection sub-surface front-ends and rear-ends 62a, 62b, 63a, 63b respectively. Each of the reflection surfaces 61a, 61b is located between the reflection surface front-end line and the rear end line 62L, 63L.

With such a continuous change as described above, the reflection surface 61 has a reflection body 6 connected to a supporting rod 66 as part of the reflection surface moving mechanism 65, as well as pivotable about a first main axis 66a generally vertical to the central axis of the lens 41. Further, the supporting rod 66 has a base supported by the base member 67 via the first main axis 66a, and is supported pivotably about a second main axis 67a vertical to the first main axis 66a, relative to the camera main body 3. Further, a cover 5 is formed with an opening 5a for accepting the reflection member 6 at a location corresponding to a corner portion of the overall image region 100 as is the other embodiments. Still further, the camera 2 is provided with a strobe 21 synchronized with the image captured by the CCD 31.

When the camera 2 shown in Fig. 21 is used, the reflection member pivots about the first main axis 66a so that an appropriate reflection surface such as 61a, 61b matching the focal length of the lens 41 is selected. Further, a flap 5a pivots to an appropriate location so as to shade light from outside of the maximum visual field. When taking a still image, the strobe 21 is then flashed and the reference scene 121 described above is captured via the CCD 31. Next, the supporting rod 66 swings outwardly about the second main axis 67a, moving the reflection surface 61 out of the visual field of the lens unit 4. Then, the strobe 21 is flashed again for capturing the main scene 110, and the color correction is performed by using the reference scene 121 and the main scene 110. It should be noted here that the strobe is not necessary for a video picture-taking. Further, the reflection surface 61 may be moved out of the visual field by swinging the supporting rod 66 about the first main axis 66a.

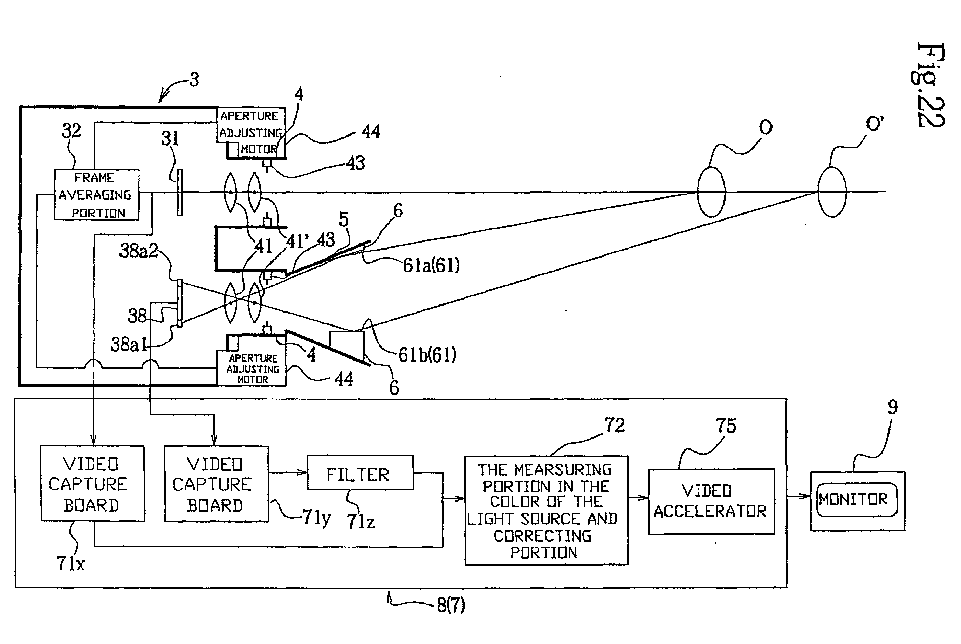

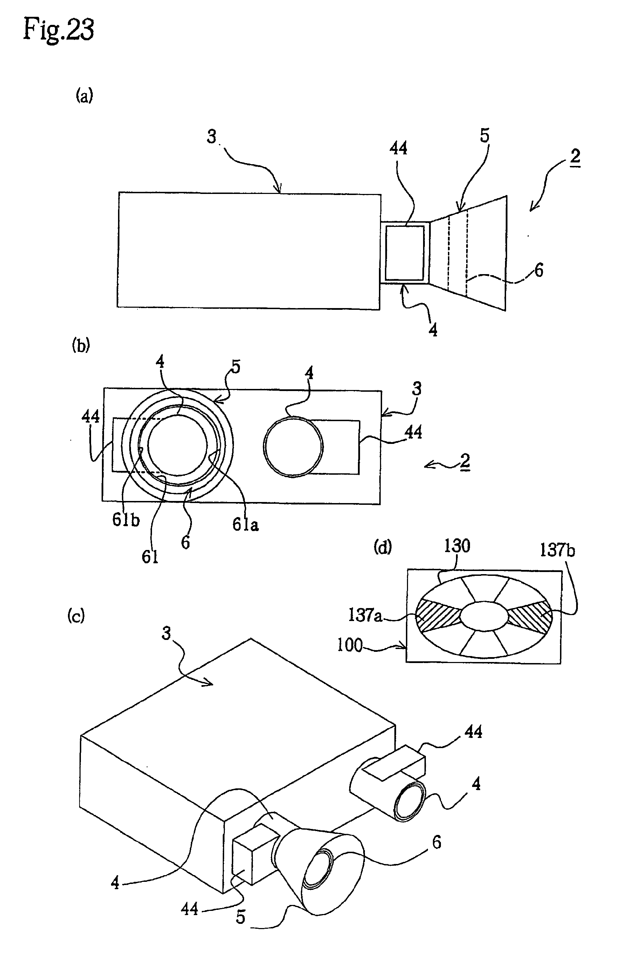

Figs. 22, 23 show an eighth embodiment, in which a third CCD 38 as another light detecting element is provided separately from the first CCD 31. The first and the third CCD's 31, 38 are respectively provided with the zoom lens units 4, 4. The irises 43, 43, and the aperture adjusting motors 44, 44 of the lens units 4, 4 are commonly controlled by the frame averaging portion 32 which is synchronizedwith the first CCD 31. Further, control of the focal length of the lenses 41, 41 is performed in synchronization. The first and the third CCD 31, 38 are respectively provided with a first and a second video capture boards 71x, 71y.

The third CCD 38 differs from the first CCD 31 only in that the third CCD 38 has a greater number of defective pixels than in the first CCD 31. The third CCD 38 may have the greater number of defective pixels because the third CCD serves only a limited purpose of capturing the color of light source from the reference scene by using the reflection surface 61. Locations of the defective pixels are identified by a test, and memorized in 71z in advance, for exclusion of the defective pixels when the correcting portion 72 calculates the color of the light source.

The cover 5 provided to the third CCD 38 is mounted with an annular reflection member 6. This reflection member 6 has a reflection surface 61 including the reflection surface angle An and the reflection surface rear end 63 continuously varied in advance in accordance with the focal length of the lens 41. For example, a reference scene reflected on the reflection surface 61 indicated by a code 61a forms an image in the selected reference portion 38a1 on the third CCD 38 whereas a reference scene reflected on 61 indicated by 61b forms an image in the selected reference portion 38 a2 on the third CCD 38. As described above, by selecting a reference portion 131a, 137b from the reference image portion 130 captured by the continuous reference surface 61 on the overall image region 100, an appropriate reference scene matched with the focal length of the lens 41 can be selected, making possible to accurately perform the color correction of the main scene.

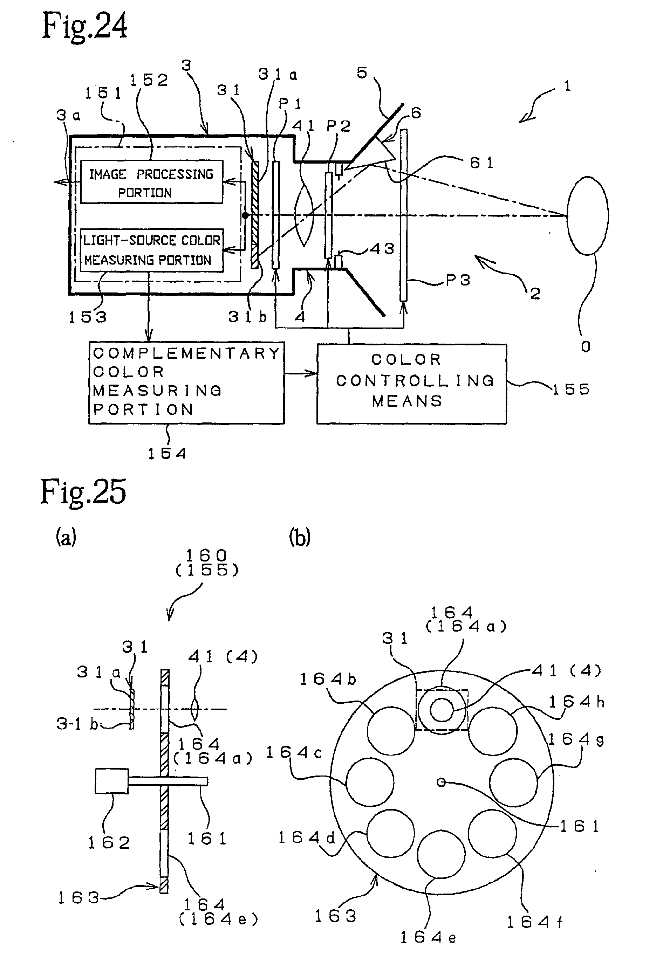

Next, reference will be made to Figs. 24 - 35 for describing configurations that use an optical correction unit. Unless otherwise mentioned and as long as technically valid, all of the relevant components and members already described are used just as in the earlier embodiments but not actually illustrated in the figures. For example, the iris 43 is controlled by the unillustrated frame averaging portion 32 and the aperture adjusting motor 44.

Fig. 24 is a block diagram showing a general model that uses an optical filter featured in a ninth through an eighteenth embodiments of the present invention. An image processing unit 151 includes an image processing portion 152 which allow parallel reception of signals from the CCD 31, and a light-source color measuring portion 153. The image processing portion 152 is similar to those in the earlier embodiments in its basic configuration, differing however, in that it does not include the light-source color measuring and the correcting portions. Signals received by the image processing portion 152 is outputted to a camera output 3a, and then to a monitor for example.

The light-source color obtained by the reference image capturing portion 31b and the light-source color measuring portion 153 is received by a complementary-color measuring portion 154, where the complementary color of the light-source color is obtained. Now, the following relationship is true in general, where Rn, Gn, Bn respectively represent intensities of RGB components obtained by the reference image capturing portion 31b and so on, and Rc, Gc, Bc respectively representing intensities of RGB components of the complementary color:

$$C = RnRc = GnGc = BnBc$$

where C represents a constant.

With the above, and from the relationship Rc/Gc = Gn/Rn = Bn/Rn, an RGB component color balance Rc, Gc, Bc of the complementary color is obtained.

The complementary color obtained by the complementary color measuring portion 154 is utilized as a filter at one of first through third positions P1-P3, by a color controlling means 155. Specific forms of the color controlling means 155 will be disclosed in several embodiments here below, and in any of the cases, the filter may be placed whichever one of the first through the third positions. The lens 41 shown in the lens unit 4 is a virtual lens, i.e. the actual lens 41 includes a plurality of lenses, and hence, the filter may be placed between these lenses.

The filter placed at one of the first through third positions P1-P3 allows both of the light from the viewing and the light from the reflection surface 61 to come to the main image capturing portion 31a and the reference image capturing portion 31b. The light-source color measuring portion 153 performs feedback control on the optical filter so that the color balance of the reference signal values (rn, gn, bn) detected by the reference image capturing portion 31b is made as close as possible to the required color balance. Specifically, functions performed by the light-source color measuring portion 153 includes obtaining the color of light source and making it as close as white, and providing the feedback control of giving the reference signal values (rn, gn, bn) a required color balance of a non-white color. In other words, the present invention has a self-contained function of correcting the color of the light source toward white, even in a case the eventual purpose of correction is not changing the color of light source to white, for the eventual target values of the correction are determined merely in accordance with the theory of additive color process.

Fig. 25 shows the ninth embodiment, or a filter rotating mechanism 160 as an example of the color controlling means 155. In this filter rotating mechanism 160, a plurality of through holes are provided in a disc 163 which is rotated in a stepped manner by a motor 162 around a shaft 161. The through holes are provided with preset filters 164a-164h each having a different color balance from each other. Each of these preset filters 164a-164h may be given a characteristic according to color temperatures. For example, normal daylight has a color temperature of 5500K, and for an artificial tungsten lighting, a color temperature is around 3200K. In this way, one of the preset filters 164a-164h having a color temperature closest to a color temperature of the complementary color is selected.

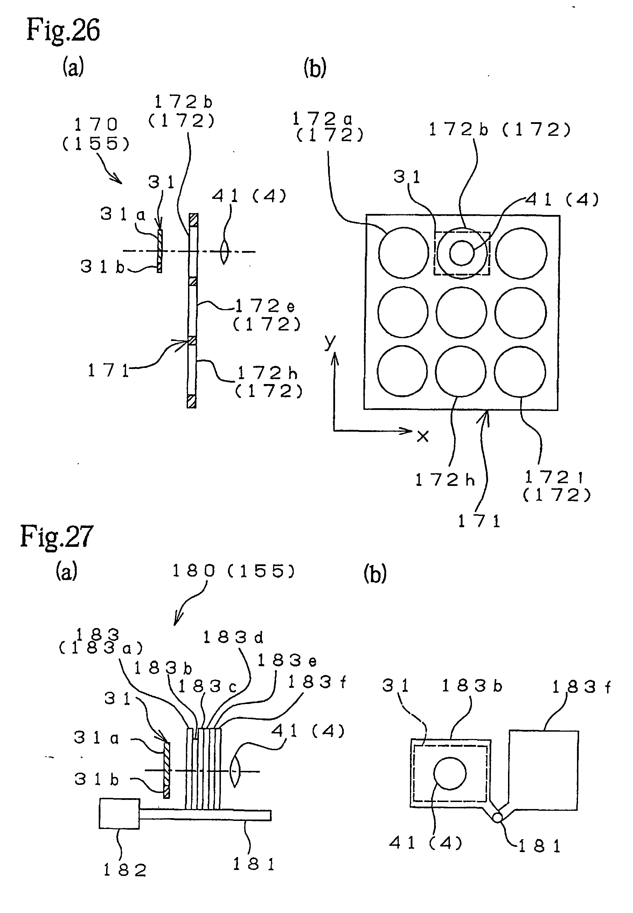

Fig. 26 shows the tenth embodiment, or a filter sliding mechanism 170 as an example of the color controlling means 155. The filter sliding mechanism 170 includes a filter holder 171 movable by an unillustrated moving member in directions along x-and-y axes each vertical to the optical axis of the lens 41 and the CCD 31, and a plurality of preset filters 172a-172i each provided in a through hole formed in the filter holder 171. In this embodiment again, one of the preset filters 164a-164h having an appropriate color temperature characteristic is selected, as is in the previous embodiment.

The ninth and the tenth embodiments may include two or more shafts 161 or filter holders 171 respectively. In this case, some of the through holes may not be provided with any filter. This arrangement allows combined use of a plurality of filters.

As another embodiment for the combined use of a plurality of filters, Fig. 27 shows a filter rotating mechanism 180 or an eleventh embodiment. In this embodiment, a plurality of preset filters 183a-183f are provided for a stepped swiveling movement by a motor 182 around a shaft 181.

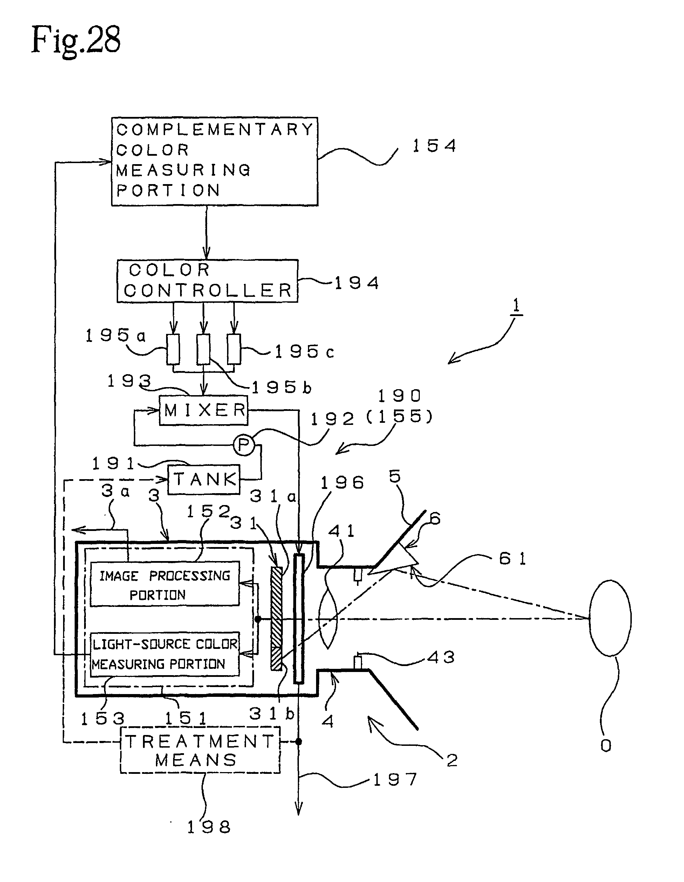

Fig. 28 shows a twelfth embodiment, or a liquid filter system 190 in which the color controlling means 155 is provided by an optical filtermeans using liquids. In this liquid filter system 190, a medium such as water and oil stored in a tank 191 is sent by a pump 192 to a mixer 193. The pump 192 may be of a very simple construction, such as a diaphragm pump capable of pumping a very small amount of the liquid. A color controller 194 controls an amount of supply of inks from each of ink injectors 195a-195c.

The ink injectors 195a-195c store inks in the respective colors of cyan, magenta and yellow. These inks can be prepared by using for example acid blue #25, acid red #289 an acid yellow #23. The colors of the inks may be RGB. However, since the other filters on e.g. the image capturing devices normally use RGB, and since the purpose of the liquid filter system 190 is to obtain a complementary color, it is preferable that the liquid filter system 190 uses CMY inks.

The inks injected by the ink injectors 195a-195c are mixed with the medium in the mixer 193, and then sent to a transparent passage 196. The transparent passage 196 is provided by transparent glass plates faced with each other with a very small gap in between serving as a very thin passage, in which the mixture of the inks flow through, serving as a filter. The mixture that have passed the transparent passage 196 is discharged via a discharge port 197. Though not illustrated, the lens 4 actually includes a plurality of lenses, and hence, the transparent passage 196 may be placed between these lenses. Additionally, treatment means 198 may be provided for mixing an ink breaching agent, for recycling the medium.

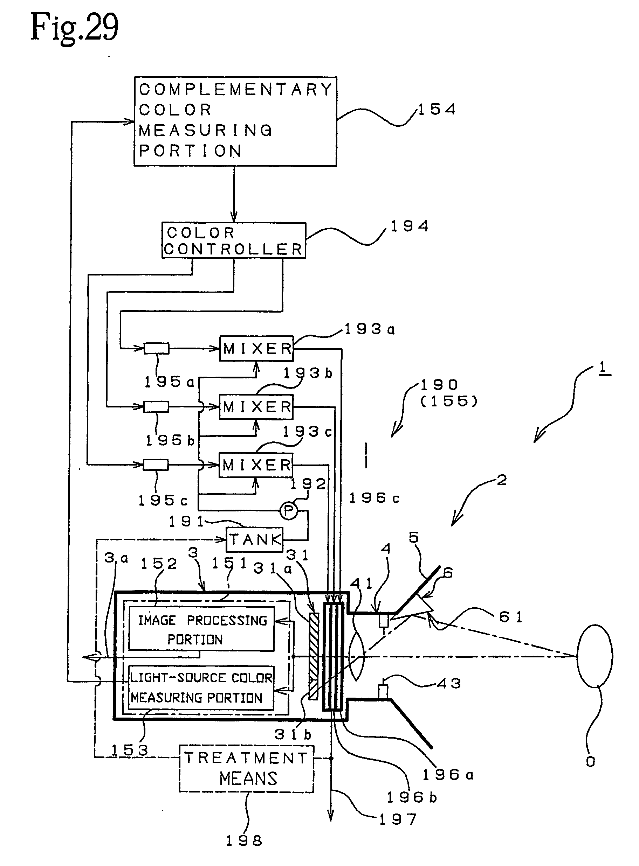

Fig. 29 shows the thirteenth embodiment as a variation of the twelfth embodiment. According to the present embodiment, the three ink injectors 195a-195c are provided with respective three mixers 193a-193c and three transparent passages 196a-196c independently of each other thereby avoiding color mixing. Filter characteristic of each color channel is controlled by changing the concentration of ink.

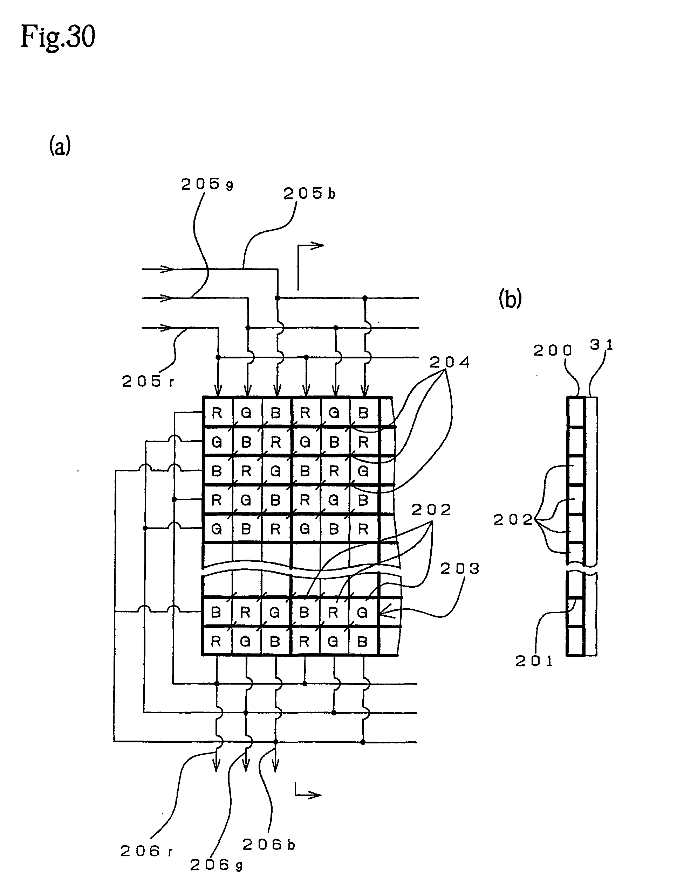

Fig. 30 shows the fourteenth embodiment, or a system that changes the color of a CCD filter 200 on e.g. a color CCD serving as the CCD 31. The CCD filter 200 has a partition wall 201 which partitions each cell 202. The cells 202 are provided to correspond to respective RGB channels of pixels 203. Further, the cells 202 serving the same color are interconnected by a bridge path 204. There are a red-color passage 205r, a green-color passage 205g and a blue-color passage 205b which are connected respectively to equivalents of the mixers 193a-193c in the thirteenth embodiment. The inks supplied via the red-color passage 205r, the green-color passage 205g and the blue-color passage 205b become respective color-mediummixtures, then pass through each cell 202, serving as filters, and then discharged through the red-color passage 205r, the green-color passage 205g and the blue-color passage 205b.

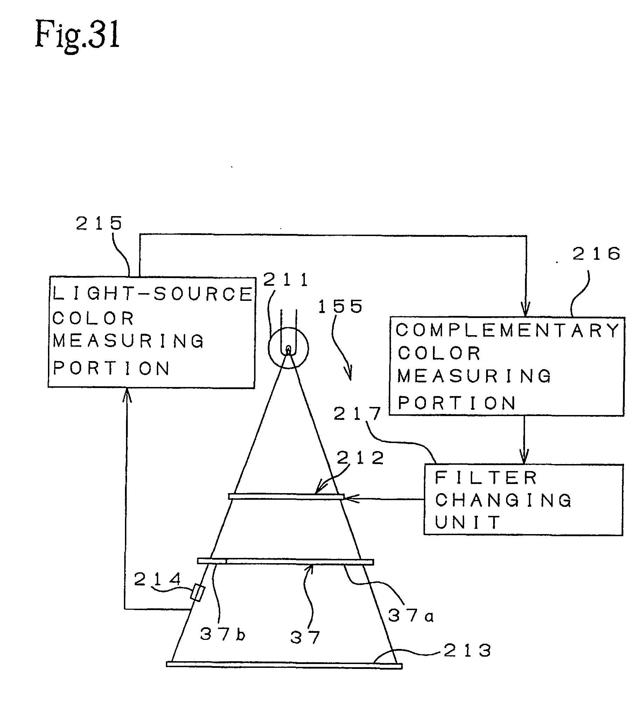

Fig. 31 shows the fifteenth embodiment, which relates to the color correction for a case where a color film 37 is used as the image capturing element, and printing is made to a printing paper 213. A lamp 211 projects light to the color film 37, via a color correction filter 212, thereby projecting an image in the color film 37 onto the printing paper 213. A color-of-light sensor 214 and a light-source color measuring portion 215 obtains a color of light source as at the time of image taking, from the reference image capturing portion ?37b?(31b). A complementary color measuring portion 216 obtains a complementary color of the color of light source, controls a filter changing unit 217 thereby changing the color of the filter 212. The color controlling means 155 including the filter 212 and filter changing unit 217 may be any of the configurations already described or any of those to be described here below.

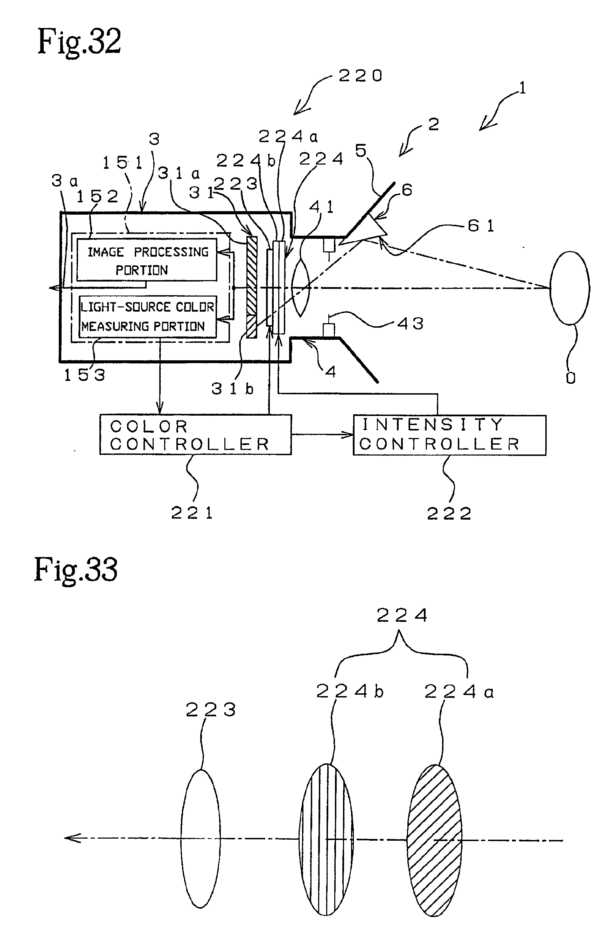

Fig. 32 shows the sixteenth embodiment, which relates to a liquid crystal tunable filter system 220, and the CCD 31 is provided by e.g. a black-and-white CCD, whereas the color controlling means 155 is provided by a liquid crystal tunable filter 223 and a darkness tunable filter 224. The liquid crystal tunable filter 223 may be provided by an LCTF which is capable of changing a filter characteristic, i.e. changing the color channel to e.g. RGB. Specifically, this filter system allows color image taking by changing the color of liquid crystal tunable filter 223 at a very short time interval, and is capable of practically providing a complementary color filter by changing the darkness of the darkness tunable filter 224 for each of the filter characteristics.

The darkness tunable filter 224 maybe configured, as shown in Fig. 33, by a pair of first and second polar filters 224a, 224b provided vertically to the optical axis of the lens unit 4, so that their relative angle can be changed. As another configuration, the darkness tunable filter 224 may be provided by a plurality of neutral gray ND filters each having a different level of darkness for selective use.

Fig. 33 shows the seventeenth embodiment, which relates to a three-CCD camera 230. The incident light from the lens unit 4 is separated by a prism 232 in an optical block 231 into RGB, and projected respectively to three black-and-white CCD devices serving as a red-color CCD 233r, a green-color CCD 233g and a blue-color CCD 233b. On respective light paths from the red-color CCD 233r, the green-color CCD 233g and the blue-color CCD 233b to the optical block 231, there are provided a red-color darkness tunable filter 234, ablue-color darkness tunable filter 235 and a green-color darkness tunable filter 236. Darkness levels of each color can be changed individually of each other so as to serve practically as a complementary color filter. As in the previous embodiments, the red-color darkness tunable filter 234, the blue-color darkness tunable filter 235 and the green-color darkness tunable filter 236 have their respective first and second polar filters 234a, b, 235a, b, and 236a, b. It is preferable that rotation control is provided for all of these first and second polar filters 234a, b, 235a, b, and 236a, b if the filter is to adjust status of incident light, such as highlight.

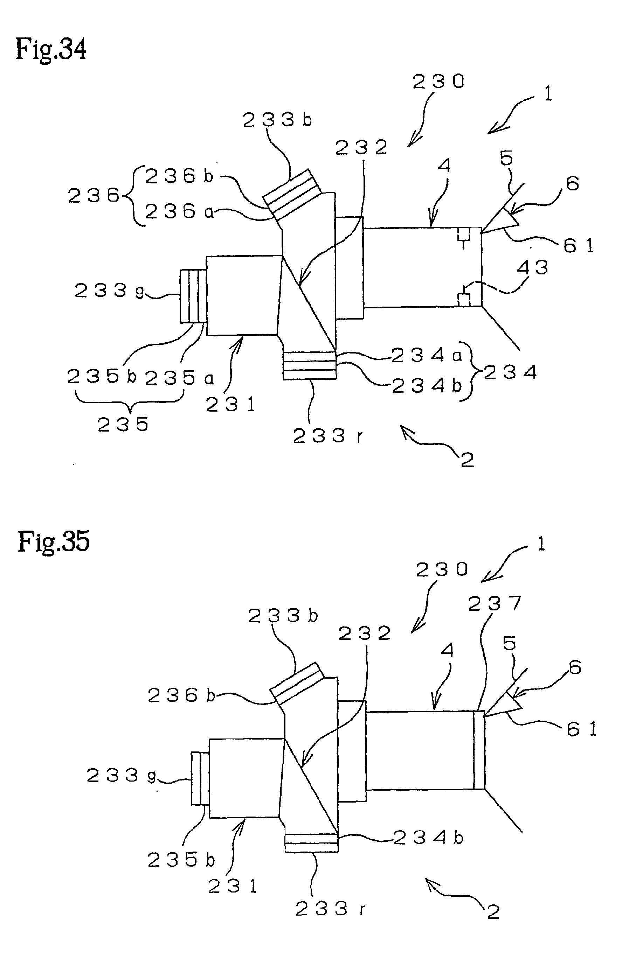

Fig. 35 shows the eighteenth embodiment, which is a variation of the seventeenth embodiment. According to the present embodiment, a first polar filter 237 is provided in front of the optical block 231, e.g. the incident side of the lens unit 4, whereas the second polar filters 234b, 235b, 236b are provided respectively for the color channels. An amount of light from e.g. a highlighted portion can be controlled by the first polar filter 237, whereas the darkness level of each color channel can be controlled individually by rotating corresponding one of the polar filters 234b, 235b, 236b with respect to the optical block 231.

Finally, mention will be made for possibility of other embodiments of the present invention.

Specifically, in each of the above embodiments, the present invention has been described for a color camera having three color channels of RGB. However, the present invention is also applicable to a color camera having a plurality of color channels other than the RGB color channels, and further, to a single channel camera such as a black-and-white camera and an infra-red camera for capturing an invisible infra-red light into an image. In such a case, the coefficient s for multiplication with the value obtained by dividing the effective input image color value by the reflection surface average color value must be a constant. It should be noted further that the camera may have two-color channels including a channel for visible light and a channel for invisible light.

According to the above embodiments, the reflection surface 61 is formed as a flat surface, convex surface or a concave surface. However, the reflection surface may also be a mesh or a small hemisphere.

In the twelfth through fourteenth embodiments, controls is provided for all of the RGB or CMY. However, the color correction can be achieved by controlling only two of the three colors. In such a case, the color channel for which the control is not made may be provided with an ND filter, which will practically provide a coarse control through the iris 43.

According to the embodiments, CCD's and color film are used as the image capturing device, but the image capturing device may not be limited to these. For example, a vidicon may be used. Further, a light detecting device may be a photodiode for example.

A plurality of the above embodiments may be combined unless conflicting with each other. Further, any of the embodiments may be used in a video camera or a still camera.

Especially, the ninth through the fourteenth embodiments and the sixteenth through the eighteenth embodiments can be combined with any of the first through eighth embodiments, which allows to take good advantages on features offered by each. More specifically, the first through eighth embodiments are characterized by a very fast processing time, and are effective during an initial capture of the object, and so, a more precise color correction may be achieved through a color correction provided by any one of the ninth through fourteen and the sixteen through eighteenth embodiments.

According to the fifth embodiment described earlier, the image A, Sa is an image taken in a studio and includes an image of an announcer whereas the image B, Sb is an image of an outdoor view such as a sky at sun set. Likewise, according to the sixth embodiment, the image A, Sa is again an image taken in a studio, including an image of an announcer, differing however in that the image B, Sb is a computer graphic image. Alternatively however, the image A, Sa may be a landscape and the image B, Sb may be of e.g. an announcer. Further, a color correction according to the present invention may be performed when making a montage by replacing a head, a face and so on. For example, from the image A, Sa which is a portrait, only the head or the face of the person is trimmed out. On the other hand, from the image B, Sb which is a portrait of a model in costume, only the head is removed, or only the face of the model is removed from a hairdo catalog photo. Then, by combining the image A and the image B after the above-described color correction, it is now possible to determine if the costume, the hairdo and so on matches well with the person, under a unified lighting and from an image merged to have a natural tone of colors.

It should be noted here that the alpha-numeral codes included in claims are only for convenience in reference to the drawings, and therefore do not limit the present invention to anything in the drawings.

INDUSTRIAL APPLICABILITY

The present invention relates to an image capturing system for correcting colors of objects or stabilizing intensity of an image, and to a camera and an image processing unit used therein. The present invention is applied to color correction in a camera provided with an image capturing device having a plurality of color channels, and is applicable also to such camera as a black-and-white camera having only a single channel.

**Claims**

1. An image capturing system for correction of colors in an image, comprising: a camera (2) including a lens (41), image capturing devices (31, 37), light detecting elements (31, 33, 37, 38) and a reflection surface (61) for capture of a main scene (110) in the image capturing devices (31, 37), each of the image capturing devices (31, 37) and the light detecting elements (31, 33, 37, 38) having a plurality of color channels, the reflection surface (61) being disposed within a visual field of the camera (2) for reflection of light from the main scene (110) or a reference scene (121, 121a ~ e) disposed near the main scene (110) for reception by the light detecting elements (31, 33, 37, 38) via the lens (41), a light-color measuring portion (72, 153) obtaining a value from one pixel (136d) or an average value from a plurality of pixels (131, 131a ~ e, 136a ~ c ), for each of the color channels as reference signal values (rn, gn, bn), out of reflected light from the reference scene (121, 121a ~ e) received by the light detecting elements (31, 33, 37, 38); and a correction unit (72) for correction of colors in the image by the reference signal values (rn, gn, bn).

2. The image capturing system according to claim 1 , wherein the correction unit is a correcting portion (72) for practical division by the reference signal values (rn, gn, bn) obtained for each of the color channels, of respective main signal values (r[x][y], g[x][y], b[x][y]) at each of corresponding locations on coordinates in the main scene (110) captured by the image capturing devices (31, 37), whereby obtaining corrected signal values (rc[x][y], gc[x][y], bc[x][y]) as corrected values of the main signal value.

3. The image processing unit used in the image capturing system according to Claim 2, wherein coefficients (sr, sg, sb) having the reference signal values (rn, gn, bn) as respective denominators are obtained in advance for respective multiplication of these coefficients (sr, sg, sb) with the main signal values (r[x][y], g[x][y], b[x][y]), whereby performing correction of the main signal.

4. The image processing unit according to Claim 3, wherein the coefficients (sr, sg, sb) have denominators respectively represented by the corresponding reference signal values (rn, gn, bn), and a numerator represented by another coefficient (s) common to all of the color channels.

5. The image processing unit according to Claim 4, wherein the coefficients (sr, sg, sb) are obtained from one of frame signals sequentially sent from the image capturing devices (31, 37) or the light detecting elements (31, 33, 37, 38), said coefficients (sr, sg, sb) being multiplied respectively with the main signal values (r[x][y], g[x][y], b[x][y]) obtained from another frame signal received at a later time, whereby performing correction of the main signal.

6. The image processing unit according to Claim 5, wherein the coefficients (sr, sg, sb) are multiplied respectively with a plurality of sets of the main signal values (r[x][y], g[x] [y], b[x] [y]) obtained from the plurality of other frames, whereby performing correction of the main signal.

7. The image processing unit according to Claim 5, further including a video amplifier (79) for multiplication of the coefficients (sr, sg, sb) with the signals from the other frames.

8. The image processing unit according to Claim 4, wherein if one of the main signal values (r[x][y], g[x][y], b[x][y]) takes a presumably maximum value (rm, gm, bm) within a set of this signal, then said another coefficient (s) is set to a value which brings the presumably maximum value (rm, gm, bm) close to a maximum scale value (D) of the main signal values.

9. The image processing unit according to Claim 4, wherein a pixel is defined as a corrupted pixel if the main signal values in the pixel have reached the maximum scale value (D) in two of the channels and if the main signal value in the remaining channel has not reached the maximum value (D), said another coefficient (s) having a value which brings presumably minimum values (rcm, bcm) of the main signal values in said remaining channel within a set of the corrupted pixels at least to the maximum scale value (D).

10. The image processing unit used in the image capturing system according to Claim 2, wherein a corrected value (bc) of the main signal in a blue channel is calculated based on a ratio between corrected values (rc, gc) in red and green channels if the main signal value only in the blue channel has reached the maximum scale value (D) and if the main signal values in the red and green channels have not reached the maximum scale value (D).

11. The image processing unit used in the image capturing system according to Claim 2, further including a compressing unit (81) of the main signal for compression of the main signal after the correction.

12. The camera used in the image capturing system according to Claim 1, further including a reflection surface moving mechanism (65) capable of disposing the reflection surface (61) out of the visual field of the camera (2).

13. The image capturing system according to Claim 1, further comprising a reflection surface moving mechanism (65) capable of disposing the reflection surface (61) out of the visual field of the camera (2) for disposition of the reflection surface (61) out of the visual field of the camera (2) by the reflection surface (61) after obtaining the reference signal values (rn, gn, bn) for capture of the main image, the main signal values (r[x][y], g[x][y], b[x][y]) being corrected based on the reference signal values (rn, gn, bn).

14. The image capturing system according to Claim 1, wherein each of the image capturing device (31) and the light detecting element (38) is constituted by an individual element of a same characteristic, the lens (41, 41) being provided individually for each of the image capturing device (31) and the light detecting element (38), the lenses (41, 41) being synchronized in zooming and iris controls, the angle and coordinate positions of a starting point of the reflection surface (61) being changed continuously in accordance with the focal length of the lens (41), the reflection surface (61) being fixed within a maximum visual field of the lens (41) for selection from a reference image portion (130), of selected reference portions (137a, 137b) corresponding to the reflection surfaces (61a, 61b) in accordance with the focal length.

15. The image capturing system according to Claim 14, further comprising a coordinate table for elimination of the corrupted pixels of the light detecting element (38) when selecting the selected reference portions (137a, 137b).

16. The image capturing system according to Claim 1, wherein the reference scene is limited mainly to a center portion or an adjacent portion of the main scene, by disposition of the reflection surface or selection of the plurality of pixels for the reference signals.

17. The image capturing system according to Claim 2, further comprising at least another of the camera, the corrected signal values (rc[x][y], gc[x][y], bc[x][y]) being provided from one of the cameras for virtual multiplication in each of the color channels with the reference signal values provided from the other camera for obtaining a secondary corrected image, the secondary corrected image being merged with an image from said other camera into a synthesized image.

18. The image capturing system according to Claim 2, further comprising a CG image generating portion (86) for generation of a computer image and a CG light source determining portion (87) for determining a light source color for the computer image for virtual multiplication of the corrected signal values (rc[x][y], gc[x][y], bc[x][y]) in each of the color channels with a light source color value obtained by the CG light source determining portion (87) for obtaining a secondary corrected image, the secondary corrected image being merged with the computer image generated by the CG image generating portion (86) into a synthesized image.

19. The camera used in the image capturing system according to Claim 1, wherein each of the image capturing devices (31, 37) and the light detecting elements (31, 33, 37, 38) is constituted by an individual element of a same characteristic.

20. The camera according to Claim 19, wherein the light detecting elements (31, 37) are part of the image capturing devices (31, 37) respectively.

21. The camera used in the image capturing system according to Claim 1, further including a storing portion (77) for storage of an image file containing images captured in the image capturing devices (31, 37) or a holding portion (36) for storage of a film (37) recorded with said images, said images containing the main scene (110) and the reference image portion (130) located at an end portion of an overall image region (100).

22. The camera used in the image capturing system according to Claim 1, wherein the overall image region (100) is rectangular, having a corner portion disposed with the reference image portion (130).

23. The camera according to Claim 22, wherein the reflection surface (61) is rotatable about a center axis of the lens (41), a position of the reflection surface (61) selectively determining one of the corners at which the reference image portion (130) being placed or the reference image portion not being placed within the overall image region (100).

24. The camera used in the image capturing system according to Claim 1, wherein the main image is laterally elongated rectangular, the reference image portion being placed at an upper portion or a lower portion of the overall image region (100).

25. The camera used in the image capturing system according to Claim 1, wherein the lens (41) is a zoom lens, the angle and coordinate positions of a starting point of the reflection surface (61) being changed in accordance with a focal length of the lens (41).

26. The camera used in the image capturing system according to Claim 1, wherein the angle and coordinate positions of a starting point of the reflection surface (61) being changed continuously in accordance with the focal length of the lens (41), relative position between the reflection surface and the lens being changed in accordance with the focal length of the lens (41) by a reflection surface moving mechanism (65).

27. An IC chip or an electric circuit provided with function realized by the image processing unit according to any one of Claims 3 ~ 11, or the image capturing system according to any one of Claims 13 ~ 18.

28. A recording medium recorded with software to be loaded into a computer for execution of the function realized by the image processing unit according to any one of Claims 3 ~ 11, or the image capturing system according to any one of Claims 13 ~ 18.

29. The image processing unit according to any one of Claims 3 ~ 11, or the image capturing system according to any one of Claims 13~ 18, wherein the image correction is performed between two computers connected with each other via a communication link such as a telephone line or Internet.

30. The camera according to any one of Claims 13, or 19 ~ 25, provided with a cover for prevention of light from entering into the reflection surface from outside of the main scene or the reference scene.

31. An image capturing system for stabilization of intensity in an image, comprising: a camera (2) including a lens (41), image capturing devices(31, 37), light detecting elements (31, 33, 37, 38) and a reflection surface (61) for capture of a main scene (110) in the image capturing devices (31, 37), the reflection surface (61) being disposed within a visual field of the camera (2) for reflection of light from the main scene (110) or a reference scene (121, 121a ~ e) disposed near the main scene (110) for reception by the light detecting elements (31, 33, 37, 38) via the lens (41); and an image processing unit (7) obtaining a value from one pixel (136d) or an average value from a plurality of pixels (131, 131a ~ e), for each of the color channels as reference signal values (rn, gn, bn), out of reflected light from the reference scene (121, 121a ~ e) received by the light detecting elements (31, 33, 37, 38), for practical division by the reference signal values (rn, gn, bn) of respective main signal values (r[x][y], g[x][y], b[x][y]) at each of corresponding locations on coordinates in the main scene (110) captured by the image capturing devices (31, 37), whereby obtaining corrected signal values (rc[x][y], gc[x][y], bc[x][y]) as corrected values of the main signal value.

32. The camera used in the image capturing system according to Claim 1, wherein the camera has an image capturing device sensitive to visible or invisible light.

33. The image capturing system according to Claim 2, wherein the correction unit includes means for measuring a complimentary color of a color determined by the reference signal values (rn, gn, bn), and optical filter means including an optical filter for reproducing the complementary color and altering a color of an image which reaches the image capturing devices.

34. The image capturing system according to Claim 33, wherein the optical filter is disposed so as to alter a color of the image which reaches the light detecting elements, the means for obtaining the complementary color controlling the optical filter so as to bring the color balance of the reference signal values (rn, gn, bn) as close as possible to a required color balance.

35. The image capturing system according to Claim 33, wherein the optical filter means includes a plurality of preset filters each having a color balance different from the others, one of the present filters closest to the complementary color being selected.

36. The image capturing system according to Claim 35, wherein a plurality of the preset filters can be used in combination.

37. The image capturing system according to Claim 33, wherein the optical filter means includes a pump for pumping a medium, an ink injector capable of injecting a plurality of color inks individually, a mixer for making a mixture of the medium and the color inks, and a transparent passage serving as the optical filter for allowing the mixture to pass through.

38. The image capturing system according to Claim 33, wherein the optical filter means includes a pump for pumping a medium, an ink injector capable of injecting a plurality of color inks individually, a plurality of mixers each for making amixture of the medium and one of the color inks individually, and a plurality of transparent passages each serving as the optical filter for allowing one of the mixtures to pass through.

**39.** The image capturing system according to Claim 33, wherein the optical filter means includes a pump for pumping a medium, an ink injector capable of injecting a plurality of color inks individually, a plurality of mixers each for making a mixture of the medium and one of the color inks individually, and a plurality of transparent cells each serving as the optical filter for allowing one of the mixtures to pass through, each cell being provided on a front surface of a black-and-white image capturing device, to correspond to one of RGB in one pixel, the cells assigned to a same color being interconnected via bridge path.

**40.** The image capturing system according to Claim 33, wherein a filter characteristic of the optical filter is changeable, the optical filter means including a transmittance level changing means capable of changing a transmittance in accordance with the filter characteristic change.

**41.** The image capturing system according to Claim 33, wherein the camera includes an optical block for separating light into RGB and, three image capturing elements respectively corresponding to RGB, the optical filter being provided by the optical block, the optical filter means including for each of the image capturing devices a transmittance level changing means capable of changing a darkness level of the image.

**42.** The image capturing system according to Claim 40 or 41, wherein each of the transmittance level changing means includes two polar filters each capable of changing its angle.

**43.** The image capturing system according to Claim 41, wherein each of the transmittance level changing means includes two polar filters each capable of changing its angle, one of the two polar filters being provided as a common filter in front of the optical block, the other of the two being provided individually per color channel behind the optical block.

**44.** The image capturing system according to Claim 33, wherein the image capturing device is provided by a film (37), the means for measuring a complementary color including a lamp, a color-of-light detector for detecting a color of light having passed the light detecting elements, a light-source-color measuring portion, and a complementary color measuring portion based on the light-source-color measuring portion, the optical filter means including a filter for further allowing the light from the lamp through the film to a printing paper, and a filter changing unit for giving this filter the complementary color.

**45.** The image capturing system according to one of Claims 33 through 41, Claims 43 and 44, wherein the correction unit further includes an electrical correcting portion (72) for practical division by the reference signal values (rn, gn, bn) obtained for each of the color channels, of respective main signal values (r[x][y], g[x][y], b[x][y]) at each of corresponding locations on coordinates in the main scene (110) captured by the image capturing devices (31, 37), whereby obtaining corrected signal values (rc[x][y], gc[x][y], bc[x][y]) as corrected values of the main signal value, the electrical correcting portion providing a color correction transitionally before completion of a color correction by the optical filter means.

# Fig.1

Fig.2

(a)

(b)

(c)

# Fig.3

(a)

(d)

(b)

(e)

(c)

(f)

# Fig.4

(a)

(b)

(c)

# Fig.5

スタート

S 1   x=0  y=0

S 2   F=1 ?

No

Yes

S 3   F=0

S 4

Import and store values
(rz[x][y],gz[x][y],bz[x][y]) at each
of corresponding location on
coordinates in each of chnnels when
the iris is completely closed

S 5   if x=XMX ?    No    S 6   x=x+1

Yes

S 7   if y=YMY ?    No    S 8   y=y+1

Yes

P 1

## Fig.6

(P1)

S 9 | x=0 y=0 ii=0

S 1 0

Import and store values (rd[x][y],gd[x][y],bd[x][y]) at each of corresponding location on coordinates in each of chnnels when the iris is completely opened

S 1 1

r[x][y]=rd[x][y]-rz[x][y]
g[x][y]=gd[x][y]-gz[x][y]
b[x][y]=bd[x][y]-bz[x][y]

S 1 2

IF(rd[x][y]<255)
AND(gd[x][y]<255)AND(bd[x][y]<255) ?

No

Yes

S 1 3

kr=r[x][y] and rh[kr]=rh[kr]+1
kg=g[x][y] and gh[kg]=gh[kg]+1
kb=b[x][y] and bh[kb]=bh[kb]+1

S 1 4

IF(((rd[x][y]<255)
AND(gd[x][y]>=255)AND(bd[x][y]>=255)) ?

No

Yes

S 1 5

ii=ii+1
krc=r[x][y] and rhc[krc]=rhc[krc]+1

S 1 6

IF((rd[x][y]>=255)
AND(gd[x][y]>=255)AND(bd[x][y]<255))) ?

No

Yes

S 1 7

ii=ii+1
kbc=b[x][y], bhc[kbc]=bhc[kbc]+1

S 1 8

if x=XMX ?

No

S 1 9

x=x+1

Yes

S 2 0

if y=YMY ?

No

S 2 1

y=y+1

Yes

(P2)

29

# Fig.7

(P2)

S 2 2   | kr=0   kg=0   kb=0 |

S 2 3

IF (kr>10) AND (rh[kr]>1000)
AND (rh[kr<rh[kr-1]) ?

No      Yes

S 2 4   | rm=kr |

S 2 6      S 2 5

| kr=kr+1 | ← IF kr=255 ?

No      Yes

S 2 7

IF (kg>10) AND (gh[kg]>1000)
AND (gh[kg<gh[kg-1]) ?

No      Yes

S 2 8   | gm=kg |

S 3 0      S 2 9

| kg=kg+1 | ← IF kg=255 ?

No      Yes

S 3 1

IF (kb>10) AND (bh[kb]>1000)
AND (bh[kb<bh[kb-1]) ?

No      Yes

S 3 2   | bm=kb |

S 3 4      S 3 3

| kb=kb+1 | ← IF kb=255 ?

No      Yes

(P3)

# Fig.8

```
                              ( P3 )
                                │
                                ▼
   S 3 5              ┌──────────────────┐
                      │  krc=0  kbc=0     │
                      └──────────────────┘
                                │
   S 3 6                        ▼
                          ◇ IF ii=/=0 ? ◇ ─── No ──────────┐
                                │                           │
                               Yes                          │
   S 3 7                        ▼                           │
                  ◇ IF(krc>10)AND(rhc[krc]=0)               │
            No ── AND(rhc[krc]=/=rhc[krc+1]) ? ◇            │
                                │                           │
                               Yes                          │
   S 3 8                        ▼                           │
                          ┌──────────┐                      │
                          │ rcm=krc  │                      │
                          └──────────┘                      │
   S 4 0         S 3 9           │                          │
  ┌──────────────┐   ◇ IF krc=255 ? ◇                      │
  │ krc=krc+1    │◄── No                                    │
  └──────────────┘           │                              │
                            Yes                             │
   S 4 1                      ▼                             │
                  ◇ IF(kbc>10)AND(bhc[kbc]=0)               │
            No ── AND(bhc[kbc]=/=bhc[kbc+1]) ? ◇   S 4 5 ┌─────────┐
                             │                           │ rcm=255 │
                            Yes                          │ bcm=255 │
   S 4 2                      ▼                          └─────────┘
                          ┌──────────┐                     │
                          │ bcm=kbc  │                     │
                          └──────────┘                     │
   S 4 4         S 4 3           │                          │
  ┌──────────────┐   ◇ IF kbc=255 ? ◇                      │
  │ kbc=kbc+1    │◄── No         │                          │
  └──────────────┘              └──────◄───────────────────┘
                               Yes
                                ▼
                              ( P4 )
```

EP 1 220 547 A1

# Fig.9

(P4)

S 4 6 — x=0 y=0

S 4 7 — IF (x+y)<=NMAX AND (x+y)>NMIN ?    No

Yes

S 4 8 — i=i+1

S 4 9

```
ra[i]=r[x][y]  ra[i]=ra[i]+ra[i-1]
ga[i]=g[x][y]  ga[i]=ga[i]+ga[i-1]
ba[i]=b[x][y]  ba[i]=ba[i]+ba[i-1]
```

S 5 1    No    x=x+1    S 5 0 — IF x=NMAX ?

S 5 3    No    y=y+1    S 5 2 — IF y=NMAX ?    Yes

Yes

S 5 4

```
rn=ra[i]/i gn=ga[i]/i bn=ba[i]/i
ssr=rn*255/rm; ssg=gn*255/gm;
ssb=bn*255/bm; scr=rn*255/rcm;
scb=bn*255/bcm;
```

S 5 5    s=(MIN(ssr,ssg,ssb)+MAX(ssr,ssg,ssb))/2

S 5 6 — IF ii>1000 ?    No    Yes

S 5 7    s=MAX(s,scr,scb)

S 5 8    sr=s/rn sg=s/gn sb=s/bn

(P5)

EP 1 220 547 A1

# Fig.10

(P5)

S 5 9 | x=0 y=0

S 6 0 | rc=r[x][y]*sr gc=g[x][y]*sg bc=b[x][y]*sb

S 6 1
IF(rd[x][y]>=255)OR(gd[x][y]>=255)
OR(bd[x][y]>=255) ?
No → Yes

S 6 2
IF(rd[x][y]>=255)AND(gd[x][y]>=255)
AND(bd[x][y]>=255) ?
No → Yes

S 6 3 | c=MAX(rc, gc, bc)
rc=c, gc=c, bc=c

S 6 4
IF((rd[x][y]<255)AND(gd[x][y]<255)
AND(bd[x][y]>=255)) ?
No → Yes

S 6 5 | bc=gc+0.5*(gc-rc)

S 6 6 | rc>255 gc>255 bc>255 rc<0 gc<0 bc<0 なら
rc=255 gc=255 bc=255 rc=0 gc=0 bc=0 にする。

S 6 7 | rc, gc, bcを出力

S 6 9 | x=x+1 S 6 8 | IF x=XMX ?
No → Yes

S 7 1 | y=y+1 S 7 0 | IF y=XMX ?
No → Yes

( エンド )

33

Fig.11

(a)

121a

110

100

131a

y

0 → x

(d)

121d

100
(31)

131d

y

0 → x

100a
(33)

(b)

131b   121b   110

100

y

0 → x

(e)

131e
100

121e

y

0 → x

131e

(c) 110   121c

100(31)

y

0 → x

131c   100a (33)

Fig.12

Fig.13

Fig.14

EP 1 220 547 A1

Fig.15

# Fig.16

Fig.17

# Fig.18

VIDEO
CAPTURE
BOARD
71

VIDEO
CAPTURE
BOARD
71

THE MEARSURING
PORTION IN THE
COLOR OF THE
LIGHT SOURCE AND
CORRECTING PORTION
72

SCENE
LIGHT
CALCULATING
PORTION
83

IMAGE
MERGING
PORTION
85

SECOND
CORRECTING
PORTION
84

MONITOR

2a

2b

Sa

Sb

Sab

9

8(7)

# Fig.19

Fig.20

Fig.21

(a)

(b)

Fig.22

Fig.23

(a)

3   44   5   2

6   4

(b)

4   5   4

44   3

44   2

61b   61a

61   6

(d)   130   137b

137a

100

(c)

3

44

4

4

44   5   6

# Fig.24

IMAGE PROCESSING PORTION

LIGHT-SOURCE COLOR MEASURING PORTION

COMPLEMENTARY COLOR MEASURING PORTION

COLOR CONTROLLING MEANS

# Fig.25

(a)

(b)

Fig.26

(a)

(b)

Fig.27

(a)    180 (155)    (b)

# Fig.28

COMPLEMENTARY
COLOR
MEASURING
PORTION — 154

COLOR
CONTROLLER — 194

195a  195c

193  195b

MIXER  190  192(155)

191  TANK

3a  3  31a  196  5  6

152 31  41

31

IMAGE PROCESSING
PORTION  61

LIGHT-SOURCE COLOR
MEASURING PORTION

153  151  31b  43

4

TREATMENT
MEANS  2

197  0

198

Fig.29

COMPLEMENTARY
COLOR
MEASURING
PORTION — 154

COLOR
CONTROLLER — 194

193a
MIXER
193b
195a
MIXER
193c
195b
MIXER
192
195c
191
P
196c
TANK

3a 152 3 151 31a 31
41 4 5
6
IMAGE PROCESSING
PORTION
61
LIGHT-SOURCE COLOR
MEASURING PORTION
43
0
31b
153 TREATMENT
MEANS
196a
196b
197
198

190
(155)

1

2

47

Fig.30

(a)

(b)

Fig.31

215

216

LIGHT-SOURCE
COLOR
MEASURING
PORTION

211

155

COMPLEMENTARY
COLOR
MEASURING
PORTION

217

212

FILTER
CHANGING
UNIT

214

37b    37    37a

213

# Fig.32

IMAGE PROCESSING PORTION

LIGHT-SOURCE COLOR MEASURING PORTION

COLOR CONTROLLER

INTENSITY CONTROLLER

221

222

# Fig.33

224

224b 224a

223

Fig.34

Fig.35

Fig.36

Fig.37

Fig.38

Fig.39

| INTERNATIONAL SEARCH REPORT | International application No. |
|---|---|
| | PCT/JP00/06294 |

A. CLASSIFICATION OF SUBJECT MATTER
    Int.Cl⁷   H04N9/04

According to International Patent Classification (IPC) or to both national classification and IPC

B. FIELDS SEARCHED

Minimum documentation searched (classification system followed by classification symbols)
    Int.Cl⁷   H04N9/04-9/11, 9/64-78, 5/225-5/253

Documentation searched other than minimum documentation to the extent that such documents are included in the fields searched
    Jitsuyo Shinan Koho          1922-1996    Toroku Jitsuyo Shinan Koho   1994-2000
    Kokai Jitsuyo Shinan Koho    1971-2000    Jitsuyo Shinan Toroku Koho   1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO, 98/27744, A (Abdellatif Mohamed Abolella), 25 June, 1998 (25.06.98), Full text; all drawings & EP, 952738, A1 | 1-45 |
| A | JP, 3-254727, A (Canon Inc.), 13 November, 1991 (13.11.91), Full text; all drawings   (Family: none) | 1-45 |
| A | JP, 5-122708, A (Sony Corporation), 18 May, 1993 (18.05.93), Full text; all drawings   (Family: none) | 1-45 |
| A | JP, 62-104389, A (Nippon Television Hosomo K.K., IKEGAMI TSUSINKI CO., LTD.), 14 May, 1987 (14.05.87), Full text; all drawings   (Family: none) | 17 |
| A | JP, 63-305226, A (Seiko Epson Corporation), 13 December, 1988 (13.12.88), Full text; all drawings   (Family: none) | 33-45 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 December, 2000 (08.12.00) | 19 December, 2000 (19.12.00) |

| Name and mailing address of the ISA/ | Authorized officer |
|---|---|
| Japanese Patent Office | |
| Facsimile No. | Telephone No. |

Form PCT/ISA/210 (second sheet) (July 1992)